(19) Europäisches Patentamt
European Patent Office
Office européen des brevets

(11) EP 4 364 580 A1

# (12) EUROPEAN PATENT APPLICATION
published in accordance with Art. 153(4) EPC

(43) Date of publication:
**08.05.2024 Bulletin 2024/19**

(21) Application number: **22833295.3**

(22) Date of filing: **30.06.2022**

(51) International Patent Classification (IPC):
***A23L 5/00** (2016.01)* ***A23L 2/52** (2006.01)*
***A23L 11/65** (2021.01)* ***C12C 5/02** (2006.01)*
***C12C 11/11** (2019.01)* ***C12G 3/04** (2019.01)*

(52) Cooperative Patent Classification (CPC):
**A23L 2/52; A23L 5/00; A23L 11/65; C12C 5/02; C12C 11/11; C12G 3/04**

(86) International application number:
**PCT/JP2022/026325**

(87) International publication number:
**WO 2023/277149 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109249**
**30.06.2021 JP 2021109250**

(71) Applicant: **Suntory Holdings Limited**
**Osaka 530-8203 (JP)**

(72) Inventors:
- **MIZUGUCHI Ikuma**
  **Fuchu-shi, Tokyo 183-8533 (JP)**
- **TANIKAWA Tsubasa**
  **Mishima-gun, Osaka 618-0001 (JP)**
- **KATO Yuichi**
  **Fuchu-shi, Tokyo 183-8533 (JP)**
- **SHIMIZU Yohei**
  **Fuchu-shi, Tokyo 183-8533 (JP)**

(74) Representative: **Vossius & Partner**
**Patentanwälte Rechtsanwälte mbB**
**Siebertstrasse 3**
**81675 München (DE)**

## (54) PROCESSED FOOD PRODUCT

(57) Provided is a processed food containing uric acid, wherein a content (X) of uric acid is 0.001 μg/g or more.

EP 4 364 580 A1

## Description

### Technical Field

The present invention relates to a processed food containing uric acid.

### Background Art

Processed foods, such as processed vegetable products, processed fruit products, meat products, dairy products, processed fish products, seasonings, and various beverages, have unique flavors and appearances depending on their raw materials. However, these processed foods have problems in that oxygen may be incorporated in the foods in the production process, and oxygen permeates through a container during the storage of the product after production and may enter the foods, thereby reducing the flavor and impairing the appearance. To solve such problems with processed products, various proposals have been made.

For example, Patent Literature 1 describes a tea beverage or a coffee beverage containing hydroxytyrosol, one of polyphenol components contained in olive, in a predetermined content together with caffeine for the purpose of providing a fruit juice beverage having maintained flavor and freshness of appearance.

### Citation List

### Patent Literature

Patent Literature 1: JP 2009-039048 A

### Summary of Invention

### Technical Problem

In such circumstances, there is a demand for processed foods with improved stability of various characteristics possessed by the processed food (e.g., such as flavor stability and appearance stability).

### Solution to Problem

The present invention provides a processed food containing a predetermined amount of uric acid. Specifically, the present invention provides the following embodiments [1] to [9].

[1] A processed food containing uric acid, wherein a content (X) of uric acid is 0.001 μg/g or more.
[2] The processed food according to [1] above, wherein a content (Y) of purines is 1000 μg/g or less.
[3] The processed food according to [1] or [2] above, wherein a ratio [(X)/(Y)] is 0.00001 or more. where (X) (unit: μg/g) is the content of uric acid and (Y) (unit: μg/g) is the content of purines.
[4] The processed food according to any one of [1] to [3] above, wherein the processed food is a processed food belonging to middle classifications 72 to 76 in Japan Standard Commodity Classification revised in June 1990, with the exception of ice and manufactured tobacco belonging to middle classification 76.
[5] The processed food according to any one of [1] to [4] above, wherein the processed food is a beer-taste beverage.
[6] The processed food according to any one of [1] to [5] above, having xanthine oxidase activity.
[7] The processed food according to any one of [1] to [5] above, containing a protein having had xanthine oxidase activity.
[8] A method of producing the processed food described in any one of [1] to [7], the method including:
adjusting the content (X) of uric acid.
[9] A method of stabilizing a characteristic possessed by a processed food, wherein the processed food with a content (X) of uric acid adjusted to 0.001 μg/g or more is prepared.

### Advantageous Effects of Invention

The processed food according to a suitable embodiment of the present invention can be, for example, a processed food with improved stability of various characteristics (e.g., such as flavor stability and appearance stability).

Description of Embodiments

1. Processed food

A processed food according to an embodiment of the present invention is a food obtained by applying a certain processing to a food material, and examples include processed foods belonging to middle classifications 72 to 76 in Japan Standard Commodity Classification revised in June 1990, with the exception of ice and manufactured tobacco belonging to middle classification 76.

Examples of a specific processed food according to an embodiment of the present invention include processed vegetable products (such as canned vegetables, bottled vegetables, processed tomato products, processed mushroom products, salt-preserved vegetables, pickled vegetables, frozen vegetable food, dried vegetables, and vegetables boiled in soy sauce), processed fruit products (such as canned fruits, bottled fruits, fruit beverage raw materials, jam, marmalade, fruit butter, pickled fruits, dried fruits, and frozen fruit food), tea products, coffee products, cocoa products, spices, noodles, breads, confectionery, cooked legume products (such as sweet bean paste products, boiled legume products, tofu, deep-fried tofu products, tofu skin, freeze dried tofu, fermented soy beans, roasted soybean flour, soy milk products, peanut products, and roasted beans), konjac jelly, meat products (such as processed meat products, canned game meat, bottled game meat, and frozen game meat food), dairy products (such as liquid milk, cream, condensed milk, concentrated milk, powdered milk, skimmed milk, skimmed concentrated milk, fermented milk, lactic acid bacteria beverages, butter, cheese, curd, whey, ice creams, lactose, casein preparations, and food made from milk or the like as a main raw material), processed egg products (such as liquid chicken egg, powdered chicken egg, processed frozen chicken egg products, processed products of duck eggs, and processed products of quail eggs), processed fish and shellfish (such as dried fish and shellfish, salted and dried fish and shellfish, boiled dried fish and shellfish, salt-preserved fish and shellfish, canned fish and shellfish, frozen fish and shellfish, frozen aquatic food, fish paste products, smoked fish and shellfish, dried and fermented fish, dried fermented fish flakes, salted and fermented fish and guts, aquatic products boiled in soy sauce, pickled aquatic products, and seasoned processed aquatic products), processed seaweeds (such as processed kelp products, processed laver products, processed wakame seaweed (*Undaria pinnatifida*) products, processed hiziki (*Hizikia fusiformis*), agar, salt-preserved seaweeds, frozen seaweed food, and dried seaweeds for producing agar), seasonings (such as common salt, miso, soy sauce, sauce, vinegar, Wafu Dashi no Moto (powdered Japanese soup stock), consomme cubes, umami seasonings, flavor seasonings, curry roux, soup for noodles or the like, and sauce for grilled meat), soup, dried soup, edible oils and/or fats (such as edible vegetable oils and/or fats, edible animal oils and fats, margarine, shortening, and processed oil and/or fat food), cooked food (such as cooked frozen food, chilled food, retort pouch food, boiled food, grilled food, deep-fried food, steamed food, dressed food, and cooked rice), yeast, baking powder, animal protein, seasoning vegetable protein, malts (such as malt, malt extract, and malt syrup), aromatic syrup extract, aromatic syrup concentrate, aromatic syrup paste, aromatic syrup powder, powdered juice, drinking water, sparkling soft drinks (such as carbonated water; cola drinks; carbonated drinks containing juice, such as fruit juice or vegetable juice; juice-flavored carbonated drinks (such as fruit juice-flavored carbonated drinks and vegetable juice-flavored carbonated drinks); fruit-colored carbonated drinks; carbonated drinks containing milk or the like, and non-alcoholic beer-taste beverages), non-sparkling soft drinks (such as fruit drinks, vegetable drinks, juice drinks of fruit juice, vegetable juice, or the like, juice-flavored carbonated drinks (such as fruit juice-flavored drinks and vegetable juice-flavored drinks), fruit pulp drinks, flavored drinks, flavored syrups, acid drinks made from milk or a dairy product, coffee drinks, caffeine drinks, tea-based drinks, and drinks of soy milk or the like), alcoholic beverages (such as beer-taste beverages, liqueurs, wine (grape wine), fruit liquor, refined sake, low-malt beer, unrefined sake, distilled liquor, hard liquor, shochu (a distilled spirit made from an ingredient, such as sweet potato, barley, buckwheat, or sugar cane), sake, shaoxing wine (Chinese rice wine), whiskey, brandy, rum, gin, vodka, tequila, makgeolli (Korean unrefined wine made from rice, wheat, or the like), and shochu highball).

The processed food according to an embodiment of the present invention may be a fermented food produced through a fermentation step or may be a non-fermented food produced without undergoing a fermentation step.

The processed food according to an embodiment of the present invention may be a processed food containing a functional component or may be a processed food with a limited content of a functional component.

In the present specification, the functional component refers to an organic or inorganic component that is generally not a nutrient essential for vital activity but is expected to have various functional effects, such as a health maintenance effect, an antioxidant effect, and an alleviating effect on the action of hazardous substances, such as carcinogens. These components are incorporated into the processed food and can be supplied as nutritional components that serve the regulatory functions of the living body.

The content of the functional component contained in the processed food with a limited content of the functional component may be less than 1 mass%, less than 7500 mass ppm, less than 5000 mass ppm, less than 2500 mass ppm, less than 1000 mass ppm, less than 750 mass ppm, less than 500 mass ppm, less than 250 mass ppm, less than 100 mass ppm, less than 75 mass ppm, less than 50 mass ppm, less than 25 mass ppm, less than 10 mass ppm, less

than 1.0 mass ppm, less than 100 mass ppb, less than 10 mass ppb, less than 1 mass ppb, or less than 0.1 mass ppb based on the total amount (100 mass%) of the processed food.

The processed food according to an embodiment of the present invention includes an embodiment in which the processed food is a beverage.

The beverage according to an embodiment of the present invention may be a fermented beverage produced through a fermentation step using yeast or may be a non-fermented beverage.

The beverage according to an embodiment of the present invention may be a sweetened beverage or may be a non-sweetened beverage.

The beverage according to an embodiment of the present invention may be an extracted beverage, such as tea or coffee, or may be a non-extracted beverage.

The beverage according to an embodiment of the present invention may be a milk beverage containing raw milk, powdered milk, or the like, or may be a non-milk beverage.

The beverage according to an embodiment of the present invention may be an alcoholic beverage with an alcoholic strength of 1.0 (v/v)% or more or may be a non-alcoholic beverage with an alcoholic strength of less than 1.0 (v/v)%.

The alcoholic strength of the alcoholic beverage according to an embodiment of the present invention may be 1.0 (v/v)% or more, 1.2 (v/v)% or more, 1.4 (v/v)% or more, 1.5 (v/v)% or more, 1.6 (v/v)% or more, 1.8 (v/v)% or more, 2.0 (v/v)% or more, 2.2 (v/v)% or more, 2.4 (v/v)% or more, 2.5 (v/v)% or more, 2.6 (v/v)% or more, 2.8 (v/v)% or more, 3.0 (v/v)% or more, 3.2 (v/v)% or more, 3.4 (v/v)% or more, 3.5 (v/v)% or more, 3.6 (v/v)% or more, 3.8 (v/v)% or more, 4.0 (v/v)% or more, 4.2 (v/v)% or more, 4.4 (v/v)% or more, 4.5 (v/v)% or more, 4.6 (v/v)% or more, 4.8 (v/v)% or more, 5.0 (v/v)% or more, 5.2 (v/v)% or more, 5.4 (v/v)% or more, 5.6 (v/v)% or more, 5.7 (v/v)% or more, 5.8 (v/v)% or more, 6.0 (v/v)% or more, 6.2 (v/v)% or more, 6.4 (v/v)% or more, 6.6 (v/v)% or more, 6.8 (v/v)% or more, 7.0 (v/v)% or more, 7.2 (v/v)% or more, 7.4 (v/v)% or more, 7.6 (v/v)% or more, 7.8 (v/v)% or more, 8.0 (v/v)% or more, 8.2 (v/v)% or more, 8.4 (v/v)% or more, 8.6 (v/v)% or more, 8.8 (v/v)% or more, 9.0 (v/v)% or more, 9.2 (v/v)% or more, 9.4 (v/v)% or more, 9.6 (v/v)% or more, 9.8 (v/v)% or more, 10.0 (v/v)% or more, or 15.0 (v/v)% or more, and may be 99.0 (v/v)% or less, 90.0 (v/v)% or less, 80.0 (v/v)% or less, 70.0 (v/v)% or less, 60.0 (v/v)% or less, 50.0 (v/v)% or less, 40.0 (v/v)% or less, 30.0 (v/v)% or less, 25.0 (v/v)% or less, 20.0 (v/v)% or less, 19.8 (v/v)% or less, 19.6 (v/v)% or less, 19.4 (v/v)% or less, 19.2 (v/v)% or less, 19.0 (v/v)% or less, 18.8 (v/v)% or less, 18.6 (v/v)% or less, 18.4 (v/v)% or less, 18.2 (v/v)% or less, 18.0 (v/v)% or less, 17.8 (v/v)% or less, 17.6 (v/v)% or less, 17.4 (v/v)% or less, 17.2 (v/v)% or less, 17.0 (v/v)% or less, 16.8 (v/v)% or less, 16.6 (v/v)% or less, 16.4 (v/v)% or less, 16.2 (v/v)% or less, 16.0 (v/v)% or less, 15.8 (v/v)% or less, 15.6 (v/v)% or less, 15.4 (v/v)% or less, 15.2 (v/v)% or less, 15.0 (v/v)% or less, 14.8 (v/v)% or less, 14.6 (v/v)% or less, 14.4 (v/v)% or less, 14.2 (v/v)% or less, 14.0 (v/v)% or less, 13.8 (v/v)% or less, 13.6 (v/v)% or less, 13.4 (v/v)% or less, 13.2 (v/v)% or less, 13.0 (v/v)% or less, 12.8 (v/v)% or less, 12.6 (v/v)% or less, 12.4 (v/v)% or less, 12.2 (v/v)% or less, 12.0 (v/v)% or less, 11.8 (v/v)% or less, 11.6 (v/v)% or less, 11.4 (v/v)% or less, 11.2 (v/v)% or less, 11.0 (v/v)% or less, 10.8 (v/v)% or less, 10.6 (v/v)% or less, 10.4 (v/v)% or less, 10.2 (v/v)% or less, 10.0 (v/v)% or less, 9.8 (v/v)% or less, 9.6 (v/v)% or less, 9.4 (v/v)% or less, 9.2 (v/v)% or less, 9.0 (v/v)% or less, 8.8 (v/v)% or less, 8.6 (v/v)% or less, 8.4 (v/v)% or less, 8.2 (v/v)% or less, 8.0 (v/v)% or less, 7.8 (v/v)% or less, 7.6 (v/v)% or less, 7.4 (v/v)% or less, 7.2 (v/v)% or less, 7.0 (v/v)% or less, 6.8 (v/v)% or less, 6.6 (v/v)% or less, 6.4 (v/v)% or less, 6.2 (v/v)% or less, 6.0 (v/v)% or less, 5.8 (v/v)% or less, 5.6 (v/v)% or less, 5.4 (v/v)% or less, 5.2 (v/v)% or less, 5.0 (v/v)% or less, 4.8 (v/v)% or less, 4.6 (v/v)% or less, 4.4 (v/v)% or less, 4.2 (v/v)% or less, 4.0 (v/v)% or less, 3.8 (v/v)% or less, 3.6 (v/v)% or less, 3.4 (v/v)% or less, 3.2 (v/v)% or less, 3.0 (v/v)% or less, 2.8 (v/v)% or less, 2.6 (v/v)% or less, 2.4 (v/v)% or less, 2.2 (v/v)% or less, 2.0 (v/v)% or less, 1.8 (v/v)% or less, 1.6 (v/v)% or less, 1.4 (v/v)% or less, or 1.2 (v/v)% or less.

The alcoholic strength of the non-alcoholic beverage according to an embodiment of the present invention may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beverage substantially free of alcohol.

The "non-alcoholic beverage substantially free of alcohol" does not exclude beverages containing a trace amount of alcohol that is undetectable. The non-alcoholic beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beverage according to an embodiment of the present invention may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beverage may be a non-sweet beverage, such as a non-alcoholic beer-taste beverage, or

may be a sweet beverage, such as a soft drink.

In the present specification, the "alcoholic strength" or "alcohol content" refers to a content of ethanol and does not include aliphatic alcohols.

In addition, in the present specification, the "alcoholic strength" or "alcohol content" is expressed as a volume/volume percentage ((v/v)%) and can be measured by any known method, for example, with a vibrating densimeter. Specifically, the alcoholic strength can be determined by preparing a sample from the beverage by removing carbonic acid gas through filtration or with ultrasonication, distilling the sample over direct heat, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (H19 National Tax Agency Order No. 6, revised on June 22, 2007). In addition, a non-alcoholic beverage with an alcoholic strength of less than 1.0 (v/v)% can also be measured using a commercially available alcohol measuring device or gas chromatography.

The processed food of the present invention contains uric acid.

The processed food prepared to contain uric acid can prevent deterioration of characteristics (e.g., such as flavor and appearance) peculiar to each processed food and can be a processed food with improved stability of various characteristics.

In the present specification, "uric acid" refers to a compound represented by the following formula and can be synthesized, for example, from an oxypurine, such as xanthine or hypoxanthine, by xanthine oxidase. In addition, the uric acid is distinguished from a uric acid produced as an end product of metabolism of purines which are one of the constituent components of nucleic acids (DNAs and RNAs) and ATP in the human body.

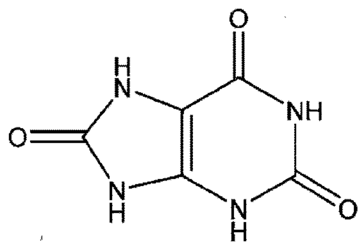

In the processed food according to an embodiment of the present invention, from the viewpoint of preparing a processed food with further improved stability of a characteristic peculiar to each processed food, the content (X) of uric acid may be 0.001 μg/g or more, 0.003 μg/g or more, 0.005 μg/g or more, 0.007 μg/g or more, 0.01 μg/g or more, 0.03 μg/g or more, 0.05 μg/g or more, 0.07 μg/g or more, 0.10 μg/g or more, 0.15 μg/g or more, 0.20 μg/g or more, 0.25 μg/g or more, 0.30 μg/g or more, 0.35 μg/g or more, 0.40 μg/g or more, 0.45 μg/g or more, 0.50 μg/g or more, 0.55 μg/g or more, 0.60 μg/g or more, 0.65 μg/g or more, 0.70 μg/g or more, 0.75 μg/g or more, 0.80 μg/g or more, 0.85 μg/g or more, 0.90 μg/g or more, 0.95 μg/g or more, 1.0 μg/g or more, 1.5 μg/g or more, 2.0 μg/g or more, 2.5 μg/g or more, 3.0 μg/g or more, 3.5 μg/g or more, 4.0 μg/g or more, 4.5 μg/g or more, 5.0 μg/g or more, 5.5 μg/g or more, 6.0 μg/g or more, 6.5 μg/g or more, 7.0 μg/g or more, 7.5 μg/g or more, 8.0 μg/g or more, 8.5 μg/g or more, 9.0 μg/g or more, 9.5 μg/g or more, 10.0 μg/g or more, 11.0 μg/g or more, 12.0 μg/g or more, 13.0 μg/g or more, 14.0 μg/g or more, 15.0 μg/g or more, 16.0 μg/g or more, 17.0 μg/g or more, 18.0 μg/g or more, 19.0 μg/g or more, or 20.0 μg/g or more.

In addition, the content (X) of uric acid may be 10000 μg/g or less, 9000 μg/g or less, 8000 μg/g or less, 7000 μg/g or less, 6000 μg/g or less, 5000 μg/g or less, 4500 μg/g or less, 4000 μg/g or less, 4500 μg/g or less, 3000 μg/g or less, 2500 μg/g or less, 2200 μg/g or less, 2000 μg/g or less, 1800 μg/g or less, 1600 μg/g or less, 1500 μg/g or less, 1300 μg/g or less, 1200 μg/g or less, 1100 μg/g or less, 1000 μg/g or less, 900 μg/g or less, 800 μg/g or less, 700 μg/g or less, 600 μg/g or less, 500 μg/g or less, 450 μg/g or less, 400 μg/g or less, 350 μg/g or less, 300 μg/g or less, 280 μg/g or less, 250 μg/g or less, 220 μg/g or less, 200 μg/g or less, 180 μg/g or less, 160 μg/g or less, 150 μg/g or less, 140 μg/g or less, 130 μg/g or less, 120 μg/g or less, 110 μg/g or less, 100 μg/g or less, 95 μg/g or less, 90 μg/g or less, 85 μg/g or less, 80 μg/g or less, 75 μg/g or less, 70 μg/g or less, 65 μg/g or less, 60 μg/g or less, 55 μg/g or less, 50 μg/g or less, 45 μg/g or less, 40 μg/g or less, 35 μg/g or less, 30 μg/g or less, 27 μg/g or less, 25 μg/g or less, 22 μg/g or less, or 20 μg/g or less.

The content (X) of uric acid means the mass of uric acid contained in 1 g of the processed food. In the case where the processed food is a liquid, the content of uric acid can also be regarded as the mass of uric acid contained in 1 mL of the processed food when the density of the liquid is converted into 1.0 $mL/cm^3$.

In the present specification, the content (X) of uric acid can be measured by high-performance liquid chromatography (HPLC), for example, under the specific measurement conditions as follows.

· Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.
· Measurement device: A high-performance liquid chromatograph Chromaster (available from Hitachi High-Technologies Corporation)
· Detector: 5420UV-VIS detector (available from Hitachi High-Technologies Corporation)
· Column: Inertsil ODS-4 (4.6 mm × 250 mm, 5 μm)
· Column temperature: 40°C
· Mobile phase: A = a 74 mM phosphate buffer solution (pH 2.2), B = methanol, A/B = 98/2 (volume ratio)
· Flow rate: 1.0 mL/min
· Injection volume: 50 μL
· Measurement wavelength: 284 nm

The content of xanthine in the processed food according to an embodiment of the present invention is preferably 2.2 μg/g or less, 2.00 μg/g or less, 1.90 μg/g or less, 1.80 μg/g or less, 1.70 μg/g or less, 1.60 μg/g or less, 1.50 μg/g or less, 1.40 μg/g or less, 1.30 μg/g or less, 1.20 μg/g or less, 1.10 μg/g or less, 1.00 μg/g or less, 0.90 μg/g or less, 0.80 μg/g or less, 0.70 μg/g or less, 0.60 μg/g or less, 0.50 μg/g or less, 0.40 μg/g or less, 0.30 μg/g or less, 0.20 μg/g or less, or 0.10 μg/g or less, and may be 0.00 μg/g or more, more than 0.00 μg/g, 0.10 μg/g or more, 0.20 μg/g or more, 0.30 μg/g or more, 0.40 μg/g or more, 0.50 μg/g or more, 0.60 μg/g or more, 0.70 μg/g or more, 0.80 μg/g or more, 0.90 μg/g or more, 1.00 μg/g or more, 1.10 μg/g or more, 1.20 μg/g or more, 1.30 μg/g or more, 1.40 μg/g or more, 1.50 μg/g or more, 1.60 μg/g or more, 1.70 μg/g or more, 1.80 μg/g or more, or 1.90 μg/g or more.

The content (X) of uric acid in the processed food according to an embodiment of the present invention may be adjusted to a certain amount or less.

As the method of adjusting the content (X) of uric acid to a certain amount or less, a uricase treatment is performed in which an additive for processed food, the additive having uricase activity, is used to oxidize uric acid to degrade it into allantoin and thus the uric acid content is reduced.

Thus, the processed food according to an embodiment of the present invention may be a processed food containing allantoin.

In the processed food according to an embodiment of the present invention, the content of allantoin may be 0.10 μg/g or more, 0.30 μg/g or more, 0.50 μg/g or more, 0.70 μg/g or more, 1.0 μg/g or more, 1.2 μg/g or more, 1.5 μg/g or more, 1.7 μg/g or more, 2.0 μg/g or more, 2.5 μg/g or more, 3.0 μg/g or more, 3.5 μg/g or more, 4.0 μg/g or more, 4.5 μg/g or more, 5.0 μg/g or more, 10.0 μg/g or more, 15.0 μg/g or more, 20.0 μg/g or more, 25.0 μg/g or more, 30.0 μg/g or more, 35.0 μg/g or more, 40.0 μg/g or more, 45.0 μg/g or more, 50.0 μg/g or more, 55.0 μg/g or more, 60.0 μg/g or more, 65.0 μg/g or more, 70.0 μg/g or more, 75.0 μg/g or more, 80.0 μg/g or more, 85.0 μg/g or more, 90.0 μg/g or more, 95.0 μg/g or more, 100.0 μg/g or more, 105.0 μg/g or more, 110.0 μg/g or more, 115.0 μg/g or more, 120.0 μg/g or more, 125.0 μg/g or more, 130.0 μg/g or more, 135.0 μg/g or more, 140.0 μg/g or more, 145.0 μg/g or more, 150.0 μg/g or more, 155.0 μg/g or more, 160.0 μg/g or more, 165.0 μg/g or more, 170.0 μg/g or more, 175.0 μg/g or more, 180.0 μg/g or more, 185.0 μg/g or more, 190.0 μg/g or more, or 195.0 μg/g or more, and may be 200.0 μg/g or less, 195.0 μg/g or less, 190.0 μg/g or less, 185.0 μg/g or less, 180.0 μg/g or less, 175.0 μg/g or less, 170.0 μg/g or less, 165.0 μg/g or less, 160.0 μg/g or less, 155.0 μg/g or less, 150.0 μg/g or less, 145.0 μg/g or less, 140.0 μg/g or less, 135.0 μg/g or less, 130.0 μg/g or less, 125.0 μg/g or less, 120.0 μg/g or less, 115.0 μg/g or less, 110.0 μg/g or less, 105.0 μg/g or less, 100.0 μg/g or less, 95.0 μg/g or less, 90.0 μg/g or less, 85.0 μg/g or less, 80.0 μg/g or less, 75.0 μg/g or less, 70.0 μg/g or less, 65.0 μg/g or less, 60.0 μg/g or less, 55.0 μg/g or less, 50.0 μg/g or less, 45.0 μg/g or less, 40.0 μg/g or less, 35.0 μg/g or less, 30.0 μg/g or less, 25.0 μg/g or less, 20.0 μg/g or less, 15.0 μg/g or less, or 10.0 μg/g or less.

Allantoin is converted into an ammonium ion.

Thus, in the processed food according to an embodiment of the present invention, the content of allantoin may be 9.0 μg/g or less, 8.0 μg/g or less, 7.0 μg/g or less, 6.0 μg/g or less, 5.0 μg/g or less, 4.0 μg/g or less, 3.0 μg/g or less, 2.0 μg/g or less, 1.0 μg/g or less, or less than 1.0 μg/g.

In the present specification, "allantoin" refers to a compound represented by the following formula and can be synthesized, for example, by oxidizing uric acid. In addition, the allantoin is distinguished from allantoin produced by oxidizing uric acid produced as an end product of metabolism of purines which are one of the constituent components of nucleic acids (DNAs and RNAs) and ATP in the human body.

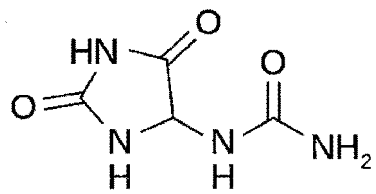

The content of allantoin means the mass of allantoin contained in 1 g of the processed food. In the case where the processed food is a liquid, the content of allantoin can also be defined as the mass of allantoin contained in 1 mL of the liquid processed food when the density of the liquid is converted into 1.0 $mL/cm^3$.

In the present specification, the content of allantoin can be measured using LC-MS/MS, specifically under the following conditions.

· Measurement sample: A liquid prepared by diluting a processed food as a measurement target 10 times with distilled water and filtering the dilution through a membrane filter with a pore size of 0.2 μm. For a processed food containing a solid content, the processed food may be finely ground as necessary to facilitate dilution with distilled water.
· Measurement device: LCMS-8040 (available from Shimadzu Corporation)
· Column: Discovery HS F5-3 (15 cm × 2.1 mm, 3 μm)
· Column temperature: 40°C
· Mobile phase: A = a 0.03 (v/v)% formic acid aqueous solution, B = 100% acetonitrile, A/B = 90/10 (volume ratio)
· Flow rate: 0.3 mL/min
· Injection volume: 10 μL

In the processed food according to an embodiment of the present invention, the content of purines is preferably as low as possible from the viewpoint of preparation of a processed food suitable for health-consciousness in recent years.

In the processed food according to an embodiment of the present invention, the content (Y) of purines is preferably 1000 μg/g or less, more preferably 800 μg/g or less, even more preferably 600 μg/g or less, still more preferably 500 μg/g or less, yet more preferably 450 μg/g or less, still even more preferably 400 μg/g or less, yet even more preferably 350 μg/g or less, particularly preferably 300 μg/g or less, and further may be 250 μg/g or less, 200 μg/g or less, 170 μg/g or less, 150 μg/g or less, 130 μg/g or less, 100 μg/g or less, 90 μg/g or less, 80 μg/g or less, 70 μg/g or less, 60 μg/g or less, 50 μg/g or less, 40 μg/g or less, 30 μg/g or less, less than 25.0 μg/g, 22.0 μg/g or less, 21.9 μg/g or less, 21.8 μg/g or less, 21.7 μg/g or less, 21.6 μg/g or less, 21.5 μg/g or less, 21.4 μg/g or less, 21.3 μg/g or less, 21.2 μg/g or less, 21.1 μg/g or less, 21.0 μg/g or less, 20.9 μg/g or less, 20.8 μg/g or less, 20.7 μg/g or less, 20.6 μg/g or less, 20.5 μg/g or less, 20.4 μg/g or less, 20.3 μg/g or less, 20.2 μg/g or less, 20.1 μg/g or less, 20 μg/g or less, 19.9 μg/g or less, 19.8 μg/g or less, 19.7 μg/g or less, 19.6 μg/g or less, 19.5 μg/g or less, 19.4 μg/g or less, 19.3 μg/g or less, 19.2 μg/g or less, 19.1 μg/g or less, 19.0 μg/g or less, 18.9 μg/g or less, 18.8 μg/g or less, 18.7 μg/g or less, 18.6 μg/g or less, 18.5 μg/g or less, 18.4 μg/g or less, 18.3 μg/g or less, 18.2 μg/g or less, 18.1 μg/g or less, 18.0 μg/g or less, 17.9 μg/g or less, 17.8 μg/g or less, 17.7 μg/g or less, 17.6 μg/g or less, 17.5 μg/g or less, 17.4 μg/g or less, 17.3 μg/g or less, 17.2 μg/g or less, 17.1 μg/g or less, 17.0 μg/g or less, 16.9 μg/g or less, 16.8 μg/g or less, 16.7 μg/g or less, 16.6 μg/g or less, 16.5 μg/g or less, 16.4 μg/g or less, 16.3 μg/g or less, 16.2 μg/g or less, 16.1 μg/g or less, 16.0 μg/g or less, 15.9 μg/g or less, 15.8 μg/g or less, 15.7 μg/g or less, 15.6 μg/g or less, 15.5 μg/g or less, 15.4 μg/g or less, 15.3 μg/g or less, 15.2 μg/g or less, 15.1 μg/g or less, 15 μg/g or less, 14.9 μg/g or less, 14.8 μg/g or less, 14.7 μg/g or less, 14.6 μg/g or less, 14.5 μg/g or less, 14.4 μg/g or less, 14.3 μg/g or less, 14.2 μg/g or less, 14.1 μg/g or less, 14.0 μg/g or less, 13.9 μg/g or less, 13.8 μg/g or less, 13.7 μg/g or less, 13.6 μg/g or less, 13.5 μg/g or less, 13.4 μg/g or less, 13.3 μg/g or less, 13.2 μg/g or less, 13.1 μg/g or less, 13.0 μg/g or less, 12.9 μg/g or less, 12.8 μg/g or less, 12.7 μg/g or less, 12.6 μg/g or less, 12.5 μg/g or less, 12.4 μg/g or less, 12.3 μg/g or less, 12.2 μg/g or less, 12.1 μg/g or less, 12 μg/g or less, 11.9 μg/g or less, 11.8 μg/g or less, 11.7 μg/g or less, 11.6 μg/g or less, 11.5 μg/g or less, 11.4 μg/g or less, 11.3 μg/g or less, 11.2 μg/g or less, 11.1 μg/g or less, 11.0 μg/g or less, 10.9 μg/g or less, 10.8 μg/g or less, 10.7 μg/g or less, 10.6 μg/g or less, 10.5 μg/g or less, 10.4 μg/g or less, 10.3 μg/g or less, 10.2 μg/g or less, 10.1 μg/g or less, 10 μg/g or less, 9.9 μg/g or less, 9.8 μg/g or less, 9.7 μg/g or less, 9.6 μg/g or less, 9.5 μg/g or less, 9.4 μg/g or less, 9.3 μg/g or less, 9.2 μg/g or less, 9.1 μg/g or less, 9.0 μg/g or less, 8.9 μg/g or less, 8.8 μg/g or less, 8.7 μg/g or less, 8.6 μg/g or less, 8.5 μg/g or less, 8.4 μg/g or less, 8.3 μg/g or less, 8.2 μg/g or less, 8.1 μg/g or less, 8.0 μg/g or less, 7.9 μg/g or less, 7.8 μg/g or less, 7.7 μg/g or less, 7.6 μg/g or less, 7.5 μg/g or less, 7.4 μg/g or less, 7.3 μg/g or less, 7.2 μg/g or less, 7.1 μg/g or less, 7.0 μg/g or less, 6.9 μg/g or less, 6.8 μg/g or less, 6.7 μg/g or less, 6.6 μg/g or less, 6.5 μg/g or less, 6.4 μg/g or less, 6.3 μg/g or less, 6.2 μg/g or less, 6.1 μg/g or less, 6.0 μg/g or less, 5.9 μg/g or less, 5.8 μg/g or less, 5.7 μg/g or less, 5.6 μg/g or less, 5.5 μg/g or less, 5.4 μg/g or less, 5.3 μg/g or less,

5.2 μg/g or less, 5.1 μg/g or less, 5.0 μg/g or less, 4.9 μg/g or less, 4.8 μg/g or less, 4.7 μg/g or less, 4.6 μg/g or less, 4.5 μg/g or less, 4.4 μg/g or less, 4.3 μg/g or less, 4.2 μg/g or less, 4.1 μg/g or less, 4.0 μg/g or less, 3.9 μg/g or less, 3.8 μg/g or less, 3.7 μg/g or less, 3.6 μg/g or less, 3.5 μg/g or less, 3.4 μg/g or less, 3.3 μg/g or less, 3.2 μg/g or less, 3.1 μg/g or less, 3.0 μg/g or less, 2.9 μg/g or less, 2.8 μg/g or less, 2.7 μg/g or less, 2.6 μg/g or less, 2.5 μg/g or less, 2.4 μg/g or less, 2.3 μg/g or less, 2.2 μg/g or less, 2.1 μg/g or less, 2.0 μg/g or less, 1.9 μg/g or less, 1.8 μg/g or less, 1.7 μg/g or less, 1.6 μg/g or less, 1.5 μg/g or less, 1.4 μg/g or less, 1.3 μg/g or less, 1.2 μg/g or less, 1.1 μg/g or less, 1.0 μg/g or less, 0.9 μg/g or less, 0.8 μg/g or less, 0.7 μg/g or less, 0.6 μg/g or less, 0.5 μg/g or less, 0.4 μg/g or less, 0.3 μg/g or less, or 0.2 μg/g or less, and may be more than 0.0 μg/g, 0.1 μg/g or more, 0.2 μg/g or more, 0.3 μg/g or more, 0.4 μg/g or more, 0.5 μg/g or more, 0.6 μg/g or more, 0.7 μg/g or more, 0.8 μg/g or more, 0.9 μg/g or more, 1.0 μg/g or more, 1.1 μg/g or more, 1.2 μg/g or more, 1.3 μg/g or more, 1.4 μg/g or more, 1.5 μg/g or more, 1.6 μg/g or more, 1.7 μg/g or more, 1.8 μg/g or more, 1.9 μg/g or more, 2.0 μg/g or more, 2.1 μg/g or more, 2.2 μg/g or more, 2.3 μg/g or more, 2.4 μg/g or more, 2.5 μg/g or more, 2.6 μg/g or more, 2.7 μg/g or more, 2.8 μg/g or more, 2.9 μg/g or more, 3.0 μg/g or more, 3.1 μg/g or more, 3.2 μg/g or more, 3.3 μg/g or more, 3.4 μg/g or more, 3.5 μg/g or more, 3.6 μg/g or more, 3.7 μg/g or more, 3.8 μg/g or more, 3.9 μg/g or more, 4.0 μg/g or more, 4.1 μg/g or more, 4.2 μg/g or more, 4.3 μg/g or more, 4.4 μg/g or more, 4.5 μg/g or more, 4.6 μg/g or more, 4.7 μg/g or more, 4.8 μg/g or more, 4.9 μg/g or more, 5.0 μg/g or more, 5.1 μg/g or more, 5.2 μg/g or more, 5.3 μg/g or more, 5.4 μg/g or more, 5.5 μg/g or more, 5.6 μg/g or more, 5.7 μg/g or more, 5.8 μg/g or more, 5.9 μg/g or more, 6.0 μg/g or more, 6.1 μg/g or more, 6.2 μg/g or more, 6.3 μg/g or more, 6.4 μg/g or more, 6.5 μg/g or more, 6.6 μg/g or more, 6.7 μg/g or more, 6.8 μg/g or more, 6.9 μg/g or more, 7.0 μg/g or more, 7.1 μg/g or more, 7.2 μg/g or more, 7.3 μg/g or more, 7.4 μg/g or more, 7.5 μg/g or more, 7.6 μg/g or more, 7.7 μg/g or more, 7.8 μg/g or more, 7.9 μg/g or more, 8.0 μg/g or more, 8.1 μg/g or more, 8.2 μg/g or more, 8.3 μg/g or more, 8.4 μg/g or more, 8.5 μg/g or more, 8.6 μg/g or more, 8.7 μg/g or more, 8.8 μg/g or more, 8.9 μg/g or more, 9.0 μg/g or more, 9.1 μg/g or more, 9.2 μg/g or more, 9.3 μg/g or more, 9.4 μg/g or more, 9.5 μg/g or more, 9.6 μg/g or more, 9.7 μg/g or more, 9.8 μg/g or more, 9.9 μg/g or more, 10.0 μg/g or more, 10.1 μg/g or more, 10.2 μg/g or more, 10.3 μg/g or more, 10.4 μg/g or more, 10.5 μg/g or more, 10.6 μg/g or more, 10.7 μg/g or more, 10.8 μg/g or more, 10.9 μg/g or more, 11.0 μg/g or more, 11.1 μg/g or more, 11.2 μg/g or more, 11.3 μg/g or more, 11.4 μg/g or more, 11.5 μg/g or more, 11.6 μg/g or more, 11.7 μg/g or more, 11.8 μg/g or more, 11.9 μg/g or more, 12.0 μg/g or more, 12.1 μg/g or more, 12.2 μg/g or more, 12.3 μg/g or more, 12.4 μg/g or more, 12.5 μg/g or more, 12.6 μg/g or more, 12.7 μg/g or more, 12.8 μg/g or more, 12.9 μg/g or more, 13.0 μg/g or more, 13.1 μg/g or more, 13.2 μg/g or more, 13.3 μg/g or more, 13.4 μg/g or more, 13.5 μg/g or more, 13.6 μg/g or more, 13.7 μg/g or more, 13.8 μg/g or more, 13.9 μg/g or more, 14.0 μg/g or more, 14.1 μg/g or more, 14.2 μg/g or more, 14.3 μg/g or more, 14.4 μg/g or more, 14.5 μg/g or more, 14.6 μg/g or more, 14.7 μg/g or more, 14.8 μg/g or more, 14.9 μg/g or more, 15.0 μg/g or more, 15.1 μg/g or more, 15.2 μg/g or more, 15.3 μg/g or more, 15.4 μg/g or more, 15.5 μg/g or more, 15.6 μg/g or more, 15.7 μg/g or more, 15.8 μg/g or more, 15.9 μg/g or more, 16.0 μg/g or more, 16.1 μg/g or more, 16.2 μg/g or more, 16.3 μg/g or more, 16.4 μg/g or more, 16.5 μg/g or more, 16.6 μg/g or more, 16.7 μg/g or more, 16.8 μg/g or more, 16.9 μg/g or more, 17.0 μg/g or more, 17.1 μg/g or more, 17.2 μg/g or more, 17.3 μg/g or more, 17.4 μg/g or more, 17.5 μg/g or more, 17.6 μg/g or more, 17.7 μg/g or more, 17.8 μg/g or more, 17.9 μg/g or more, 18.0 μg/g or more, 18.1 μg/g or more, 18.2 μg/g or more, 18.3 μg/g or more, 18.4 μg/g or more, 18.5 μg/g or more, 18.6 μg/g or more, 18.7 μg/g or more, 18.8 μg/g or more, 18.9 μg/g or more, 19.0 μg/g or more, 19.1 μg/g or more, 19.2 μg/g or more, 19.3 μg/g or more, 19.4 μg/g or more, 19.5 μg/g or more, 19.6 μg/g or more, 19.7 μg/g or more, 19.8 μg/g or more, 19.9 μg/g or more, 20.0 μg/g or more, 20.1 μg/g or more, 20.2 μg/g or more, 20.3 μg/g or more, 20.4 μg/g or more, 20.5 μg/g or more, 20.6 μg/g or more, 20.7 μg/g or more, 20.8 μg/g or more, 20.9 μg/g or more, 21.0 μg/g or more, 21.1 μg/g or more, 21.2 μg/g or more, 21.3 μg/g or more, 21.4 μg/g or more, 21.5 μg/g or more, 21.6 μg/g or more, 21.7 μg/g or more, 21.8 μg/g or more, or 21.9 μg/g or more.

The content (Y) of purines can be adjusted by selecting a raw material and adjusting the amount of a raw material to be used in view of the content of purines contained in the raw material to be used; and/or by treatment, such as adsorption treatment of purines using activated carbon, zeolite, activated clay, and/or the like; separation treatment by membrane filtration and/or centrifugation; and/or absorption treatment by the action of yeast, microorganism, and/or the like.

In the case where the processed food according to an embodiment of the present invention is a fermented processed food, the content (Y) of purines can also be adjusted by degrading a yeast-non-assimilable purine, such as adenosine or guanosine, into an assimilable purine using an enzyme, such as purine nucleosidase, and lowering the assimilable purine content by a fermentation step.

In addition, adenine can be converted into hypoxanthine by performing an adenine deaminase treatment using an additive for processed food, the additive having adenine deaminase activity, and then performing a xanthine oxidase treatment, and this enables efficient degradation by xanthine oxidase.

Likewise, guanine can be converted into xanthine by performing a guanine deaminase treatment using an additive for processed food, the additive having guanine deaminase activity, and then performing a xanthine oxidase treatment, and this also enables efficient degradation by xanthine oxidase.

Then, as described later, the content (Y) of purines can also be adjusted by lowering the content of xanthine by a xanthine oxidase treatment using an additive for processed food, the additive having xanthine oxidase activity.

As described above, in an embodiment of the present invention, from the viewpoint of preparing a processed food with further lowered purine content, the content (Y) of purines can also be adjusted by performing one or more enzymatic treatments selected from a purine nucleosidase treatment, an adenine deaminase treatment, and a guanine deaminase treatment and then performing a xanthine oxidase treatment.

In the present specification, the "purines" refers to compounds having a purine nucleus structure, and specific examples include purine bases (adenine, guanine, xanthine, and hypoxanthine), purine nucleosides (adenosine, guanosine, and inosine), purine nucleotides (adenylic acid, guanylic acid, and inosinic acid), and low-molecular-weight or high-molecular-weight nucleic acids (oligonucleotides and polynucleotides).

In addition, in the present specification, the description "content (Y) of purines" means a total content of purine bases including a group of adenine, guanine, xanthine, and hypoxanthine.

The "content of xanthine" and the "content (Y) of purines" can be measured by a detection method using LC-MS/MS ("Sake-rui no Purin-tai no Biryo Bunseki no Goannai (Guide to Microanalysis of Purines in Alcoholic Beverages)", Japan Food Research Laboratories, Internet (hrips://www.jfrl.or.jp/storage/file/news_vol4_no23.pdf, searched in August 2015)).

In the processed food according to an embodiment of the present invention, from the viewpoints of further improving the stability of a characteristic peculiar to each processed food and preparing a processed food suitable for health-consciousness in recent years, the ratio [(X)/(Y)] of the content (X) of uric acid (unit: $\mu$g/g) to the content (Y) of purines (unit: $\mu$g/g) is preferably 0.00001 or more, more preferably 0.00003 or more, even more preferably 0.00005 or more, still more preferably 0.0001 or more, yet more preferably 0.0005 or more, still even more preferably 0.001 or more, yet even more preferably 0.005 or more, particularly preferably 0.01 or more, and further may be 0.02 or more, 0.03 or more, 0.05 or more, 0.07 or more, 0.10 or more, 0.30 or more, 0.50 or more, 1.0 or more, 2.0 or more, 3.0 or more, 4.0 or more, 5.0 or more, 6.0 or more, 7,0 or more, 8.0 or more, 9.0 or more, or 10.0 or more, and may be 1000 or less, 800 or less, 600 or less, 500 or less, 400 or less, 350 or less, 300 or less, 250 or less, 20 or less, 150 or less, 100 or less, 90 or less, 80 or less, 70 or less, 60 or less, 50 or less, 40 or less, 30 or less, or 20 or less.

Meanwhile, in an embodiment of the present invention, the content (X) of uric acid can be adjusted by adding uric acid or a uric acid salt, such as sodium urate. However, uric acid has low solubility in water. Thus, preparation of a processed food containing a high concentration of uric acid may be difficult by the method of adding uric acid or a uric acid salt. Although there is a method of using a raw material containing uric acid in producing a processed food, the raw material containing uric acid is limited, and some types of processed food may have poor compatibility with such a raw material. In addition, there is also a method of using a liquid with high solubility for uric acid instead of water, but the compatibility between the processed food and such a liquid must be considered also for this method.

Studies on such problems as described above have found that a processed product containing a high concentration of uric acid can be easily produced by preparing a processed food using a raw material containing purines and a raw material having xanthine oxidase activity.

As described above, the "purines" are compounds having a purine nucleus structure. Here, xanthine oxidase is one of xanthine oxidoreductase-type enzymes, which generate reactive oxygen species. Xanthine oxidase can catalyze the oxidation of xanthine to uric acid, and can catalyze the oxidation of hypoxanthine to xanthine and xanthine to uric acid. That is, the action of xanthine oxidase can convert xanthine and hypoxanthine constituting purines contained in the raw material into uric acid and can make a processed food containing a high concentration of uric acid.

Furthermore, the processed food according to an embodiment of the present invention can lower the content of purines by the action of xanthine oxidase.

In the processed food according to an embodiment of the present invention, xanthine oxidase activity may remain or may have been inactivated. That is, the processed food according to an embodiment of the present invention may be a processed food having xanthine oxidase activity, or may be a processed food containing a protein having had xanthine oxidase activity.

In the case where the processed food according to an embodiment of the present invention has xanthine oxidase activity, the xanthine oxidase activity value may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

The xanthine oxidase activity value means the relative amount of the enzyme when the amount of the enzyme that produces 1 $\mu$mol of uric acid per minute under the following conditions is defined as 1 unit (U).

2.9 mL of a 50 mM tris-hydrochloric acid buffer solution and 0.1 mL of a 10 mM xanthine aqueous solution are mixed and pre-heated at 37°C, then 0.01 mL of a solution of an analyte is added thereto and the mixture is mixed gently. Then, the mixture is measured for a change in absorption at 293 nm per minute using a spectrophotometer controlled at 37°C with water as a control. The amount of the enzyme needed for production of 1 $\mu$mol of uric acid per minute is

determined from this value and defined as 1 unit (U), and the amount of the enzyme relative to 1 unit (U) is defined as the xanthine oxidase activity value.

The raw material having xanthine oxidase activity is not particularly limited, but examples include raw materials derived from a wide range of biological species ranging from bacteria, to mammals, and higher plants. Specific examples include raw milk (unsterilized raw milk) of a mammal, such as a cow; a microorganism belonging to the genus, such as *Pseudomonas, Escherichia, Arthrobacter,* or *Nocardia*; and *Enterobacter cloacae.*

Alternatively, a commercially available preparation of xanthine oxidase may be used as the raw material.

The processed food according to an embodiment of the present invention also includes a processed food having xanthine oxidase activity in which the raw material having xanthine oxidase activity described above is used and the xanthine oxidase activity remains.

In addition, the processed food according to an embodiment of the present invention also includes a processed food in which the raw material having xanthine oxidase activity described above is used and a protein having had xanthine oxidase activity is contained although the xanthine oxidase activity of the protein has been inactivated. Specifically, the processed food also includes a processed food in which a raw material containing a protein having xanthine oxidase activity was used but the xanthine oxidase activity has been inactivated by a process, such as heating and/or pH adjustment.

In addition, the processed food according to an embodiment of the present invention may be a processed food in which xanthine is converted into uric acid by a xanthine oxidase treatment, and then a portion of the uric acid is converted to allantoin by a uricase treatment. Such a processed food may be a processed food having uricase activity or may be a processed food containing a protein having had uricase activity.

In the case where the processed food according to an embodiment of the present invention has uricase activity, the uricase activity value may be 0.01 U or more, 0.05 U or more, 0.1 U or more, 0.3 U or more, 0.5 U or more, 0.7 U or more, 1.0 U or more, 1.5 U or more, 2.0 U or more, 2.5 U or more, 3.0 U or more, 3.5 U or more, 4.0 U or more, 5.0 U or more, 5.5 U or more, 6.0 U or more, 7.0 U or more, 8.0 U or more, 9.0 U or more, or 10.0 U or more, and may be 10000 U or less, 9000 U or less, 8000 U or less, 7000 U or less, or 6000 U or less.

In the present specification, the uricase activity value means the relative amount of the enzyme when the amount of the enzyme needed for production of 1 μmol of allantoin per minute under the following conditions is defined as 1 unit (U).

2.9 mL of a 50 mM tris-hydrochloric acid buffer solution and 0.1 mL of a 10 mM uric acid aqueous solution are mixed and pre-heated at 37°C, then 0.01 mL of a solution of an analyte is added and mixed gently, and then a change in absorption at 293 nm per minute is determined using a spectrophotometer controlled at 37°C with water as a control. The amount of the enzyme needed for production of 1 μmol of allantoin per minute is determined from this value and defined as 1 unit (U), and the amount of the enzyme relative to 1 unit (U) is defined as the uricase activity value.

In addition, the processed food according to an embodiment of the present invention also include a processed food made using a raw material containing purines, and the raw material having xanthine oxidase activity and the raw material having uricase activity described above.

The raw material having uricase activity is not particularly limited, but examples include raw materials derived from a wide range of biological species ranging from bacteria, to mammals, and higher plants. Specific examples include raw milk (unsterilized raw milk) of a mammal, such as a cow; a microorganism belonging to the genus, such as *Pseudomonas*, *Escherichia, Arthrobacter,* or *Nocardia*; and *Enterobacter cloacae.*

Alternatively, a commercially available preparation of uricase may be used as the raw material.

The processed food according to an embodiment of the present invention also includes a processed food having uricase activity in which the raw material having uricase activity is used and the uricase activity remains.

In addition, the processed food according to an embodiment of the present invention also includes a processed food in which a raw material having uricase activity is used and a protein having had uricase activity is contained although the uricase activity of the protein has been inactivated. Specifically, the processed food also includes a processed food in which a raw material containing a protein having uricase activity was used but the uricase activity has been inactivated by a process, such as heating and/or pH adjustment.

The raw material containing purines is not particularly limited, but examples include grains, such as barley and the like (such as barley, wheat, rye, wild oats, oats, and adlay), rice (such as white rice and brown rice), corn, kaoliang, potatoes, legumes (such as soybeans and peas), buckwheat, sorghum, foxtail millet, and Japanese millet; vegetables (such as spinach, cauliflower, broccoli, bean sprouts, white radish sprouts, okra, fava beans, and green peas); mushrooms (such as maitake mushroom, shiitake mushroom, nameko mushroom, enoki mushroom, button mushroom, and oyster mushroom), legumes (soybeans, adzuki beans, peanuts, fava beans, and green soybeans), bean products (such as tofu, soy milk, miso, soy sauce, okara (soy pulp), and natto (fermented soybeans)), pork, chicken, beef, mutton, whale meat, meat products (ham, sausage, bacon, salami, corned beef, and liver paste), fish meat (such as skipjack tuna, tuna, chicken grunt, Japanese Spanish mackerel, Japanese whiting, flying fish, rainbow trout, red barracuda, red sea bream, left-eyed flounder, herring, horse mackerel, greenling, mackerel, tilefish, yellowtail, salmon, ayu (sweet fish),

Japanese sea bass, rockfish, sardine, saury, carp, right-eyed flounder, loach, Japanese surfsmelt, eel, Japanese sandfish, and anglerfish), fish roe or fish roe products (cod roe, spicy cod roe, sujiko (salmon roe in the sac), herring roe, and ikura (salmon roe)), squid, octopus, shrimp, krill, crab, shellfish (such as Japanese littleneck clam, oyster, clam, and scallop), dried fish, processed fish products (such as fish meatballs, chikuwa (grilled tube-shaped fish paste), kamaboko (steamed fish paste), naruto (a boiled fish paste with a pink spiral pattern), fish sausage, and satsuma-age (fried fish paste)), almonds, green juice powder, yeast, chlorella, euglena, and royal jelly.

The processed food according to an embodiment of the present invention may be a processed food containing a high-intensity sweetener or may be a processed food with a limited content of a high-intensity sweetener.

The content of the high-intensity sweetener contained in the processed food with a limited content of the high-intensity sweetener may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of the high-intensity sweetener contained in the processed food with a limited content of the high-intensity sweetener may be less than 1000 mass ppm, less than 100 mass ppm, less than 75 mass ppm, less than 50 mass ppm, less than 40 mass ppm, less than 30 mass ppm, less than 25 mass ppm, less than 20 mass ppm, less than 15 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

Examples of the high-intensity sweetener include both natural high-intensity sweeteners and artificial high-intensity sweeteners, for example, rebaudioside A, rebaudioside B, rebaudioside C, rebaudioside D, rebaudioside E, rebaudioside F, dulcoside A, dulcoside B, rubusoside, stevia, stevioside, mogroside IV, mogroside V, monk fruit (*Siraitia grosvenorii*) sweetener, siamenoside, monatin and its salts (monatin SS, monatin RR, monatin RS, monatin SR), curculin, glycyrrhizinic acid and its salts, thaumatin, monellin, mabinlin, brazzein, hernandulcin, phyllodulcin, glycyphyllin, phlorizin, trilobatin, baiyunoside, osladin, erythritol, polypodoside A, pterocaryoside A, pterocaryoside B, mucrodioside, phlomisoside I, periandrin I, abrusoside A, and cyclocarioside I.

The processed food according to an embodiment of the present invention may be a processed food containing rebaudioside A or may be a processed food with a limited content of rebaudioside A.

The content of rebaudioside A contained in the processed food with a limited content of rebaudioside A may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of rebaudioside A contained in the processed food with a limited content of rebaudioside A may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

The processed food according to an embodiment of the present invention may be a processed food containing erythritol or may be a processed food with a limited content of erythritol.

The content of erythritol contained in the processed food with a limited content of erythritol may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the processed food.

In addition, the content of erythritol contained in the processed food with a limited content of erythritol may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the processed food.

## 2. Beer-taste beverage

The processed food according to an embodiment of the present invention may be a beer-taste beverage.

In particular, in the case of a malt beer-taste beverage, malt is known as a raw material containing purines. However, the content of purines derived from malt is lowered by using a raw material having xanthine oxidase activity together with malt and preparing to obtain a beverage having xanthine oxidase activity or a protein having had xanthine oxidase activity. In addition, this increases uric acid produced from purines and thus can easily prepare to a beverage with a high content of uric acid.

In the present specification, the "beer-taste beverage" refers to an alcohol-containing or non-alcoholic carbonated beverage with a beer-like flavor. Thus, the "beer-taste beverage" includes not only beer that is a fermented malt

beverage obtained by fermenting malt, water, and, as necessary, hop or the like as raw materials using yeast but also carbonated beverages with a beer flavor. That is, in the present specification, unless otherwise noted, the "beer-taste beverage" also includes any carbonated beverage to which a beer flavoring containing an ester or a higher alcohol (e.g., isoamyl acetate, ethyl acetate, n-propanol, isobutanol, acetaldehyde, ethyl caproate, linalool, or 4-vinylguaiacol) is added and which has a beer flavor.

In addition, the beer-taste beverage may be a fermented beer-taste beverage that has undergone a yeast-based fermentation step or may be a non-fermented beer-taste beverage that has not undergone a fermentation step.

Furthermore, the beer-taste beverage may be an alcohol-containing beer-taste beverage with an alcoholic strength of 1.0 (v/v)% or more or may be a non-alcoholic beer-taste beverage with an alcoholic strength of less than 1.0 (v/v)%.

The alcoholic strength in the alcohol-containing beer-taste beverage according to an embodiment of the present invention may be, from the viewpoint of making a beverage that can give a refreshing stimulating sensation, 1.0 (v/v)% or more, 1.5 (v/v)% or more, 2.0 (v/v)% or more, 2.5 (v/v)% or more, 3.0 (v/v)% or more, 3.5 (v/v)% or more, 4.0 (v/v)% or more, 4.5 (v/v)% or more, 5.0 (v/v)% or more, 5.4 (v/v)% or more, or 5.7 (v/v)% or more, and may be, from the viewpoint of making a beer-taste beverage that is easy to drink, 20.0 (v/v)% or less, 17.0 (v/v)% or less, 15.0 (v/v)% or less, 12.0 (v/v)% or less, 10.0 (v/v)% or less, 9.0 (v/v)% or less, 8.0 (v/v)% or less, or 7.0 (v/v)% or less.

The alcoholic strength in the non-alcoholic beer-taste beverage according to an embodiment of the present invention may be less than 1.0 (v/v)%, 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, 0.05 (v/v)% or less, 0.01 (v/v)% or less, 0.0050 (v/v)% or less, or 0.0025 (v/v)% or less, or the non-alcoholic beverage may be a non-alcoholic beer-taste beverage substantially free of alcohol.

The "non-alcoholic beer-taste beverage substantially free of alcohol" does not exclude beverages containing a trace amount of alcohol that is undetectable. The non-alcoholic beer-taste beverage also includes beverages whose alcoholic strength is 0 (v/v)% when the value is rounded off to the integer, beverages whose alcoholic strength is 0.0 (v/v)% when the value is rounded off to the first decimal place, and beverages whose alcoholic strength is 0.00 (v/v)% when the value is rounded off to the second decimal place.

In addition, the non-alcoholic beer-taste beverage according to an embodiment of the present invention may be a beverage with an alcoholic strength of 0.1 (v/v)% or more and less than 1.0 (v/v)%, 0.2 (v/v)% or more and less than 1.0 (v/v)%, 0.3 (v/v)% or more and less than 1.0 (v/v)%, 0.4 (v/v)% or more and less than 1.0 (v/v)%, 0.5 (v/v)% or more and less than 1.0 (v/v)%, 0.6 (v/v)% or more and less than 1.0 (v/v)%, 0.7 (v/v)% or more and less than 1.0 (v/v)%, 0.8 (v/v)% or more and less than 1.0 (v/v)%, or 0.9 (v/v)% or more and less than 1.0 (v/v)%.

The non-alcoholic beer-taste beverage may be a non-alcoholic fermented beer-taste beverage produced by removing the alcohol produced in the fermentation step after the fermentation step, may be a beverage produced by stopping the fermentation at a stage where the alcoholic strength is less than 1.0 (v/v)% in the yeast-based fermentation step, or may be a non-alcoholic non-fermented beer-taste beverage prepared to have a beer-like flavor without performing a fermentation step. The non-alcoholic beer-taste beverage also includes a beer-taste soft drink.

In addition, the beer-taste beverage may be a beer-taste malt beverage made using malt as a raw material or may be a beer-taste malt-free beverage made without using malt. The beer-taste beverage is preferably a beer-taste malt beverage and more preferably a beer-taste barley malt beverage.

Furthermore, the beer-taste beverage may be an ale beer-taste beverage brewed through a fermentation step using top-fermenting yeast or may be a lager beer-taste beverage brewed through a fermentation step using bottom-fermenting yeast.

Moreover, the beer-taste beverage may be a distilled liquor-containing beer-taste beverage containing a distilled liquor, such as spirits, whiskey, or shochu, and among them, a spirits-containing beer-taste beverage is preferred.

Still more, the beer-taste beverage may be a distilled liquor-free beer-taste beverage containing no distilled liquor or may be a spirits-free beer-taste beverage containing no spirits.

The beer-taste beverage according to a specific embodiment of the present invention may be a fermented beer-taste beverage, may be an alcohol-containing fermented beer-taste beverage, or may be a fermented beer-taste malt beverage.

In the case where the beverage according to an embodiment of the present invention is a beer-taste beverage, from the viewpoint of making a beverage with excellent taste typical of a beer-taste beverage, the malt ratio may be 10 mass% or more, 11 mass% or more, 12 mass% or more, 13 mass% or more, 14 mass% or more, 15 mass% or more, 16 mass% or more, 17 mass% or more, 18 mass% or more, 19 mass% or more, 20 mass% or more, 21 mass% or more, 22 mass% or more, 23 mass% or more, 24 mass% or more, 25 mass% or more, 26 mass% or more, 27 mass% or more, 28 mass% or more, 29 mass% or more, 30 mass% or more, 31 mass% or more, 32 mass% or more, 33 mass% or more, 34 mass% or more, 35 mass% or more, 36 mass% or more, 37 mass% or more, 38 mass% or more, 39 mass% or more, 40 mass% or more, 41 mass% or more, 42 mass% or more, 43 mass% or more, 44 mass% or more, 45 mass% or more, 46 mass% or more, 47 mass% or more, 48 mass% or more, 49 mass% or more, 50 mass% or more, 51 mass% or more,

52 mass% or more, 53 mass% or more, 54 mass% or more, 55 mass% or more, 56 mass% or more, 57 mass% or more, 58 mass% or more, 59 mass% or more, 60 mass% or more, 61 mass% or more, 62 mass% or more, 63 mass% or more, 64 mass% or more, 65 mass% or more, 66 mass% or more, 67 mass% or more, 68 mass% or more, 69 mass% or more, 70 mass% or more, 71 mass% or more, 72 mass% or more, 73 mass% or more, 74 mass% or more, 75 mass% or more, 76 mass% or more, 77 mass% or more, 78 mass% or more, 79 mass% or more, 80 mass% or more, 81 mass% or more, 82 mass% or more, 83 mass% or more, 84 mass% or more, 85 mass% or more, 86 mass% or more, 87 mass% or more, 88 mass% or more, 89 mass% or more, 90 mass% or more, 91 mass% or more, 92 mass% or more, 93 mass% or more, 94 mass% or more, 95 mass% or more, 96 mass% or more, 97 mass% or more, 98 mass% or more, or 99 mass% or more, and is 100 mass% or less, but from the viewpoint of making a beer-taste beverage that is easy to drink, the malt ratio may be less than 100 mass%, 90 mass% or less, 89 mass% or less, 88 mass% or less, 87 mass% or less, 86 mass% or less, 85 mass% or less, 84 mass% or less, 83 mass% or less, 82 mass% or less, 81 mass% or less, 80 mass% or less, 79 mass% or less, 78 mass% or less, 77 mass% or less, 76 mass% or less, 75 mass% or less, 74 mass% or less, 73 mass% or less, 72 mass% or less, 71 mass% or less, 70 mass% or less, 69 mass% or less, 68 mass% or less, 67 mass% or less, 66 mass% or less, 65 mass% or less, 64 mass% or less, 63 mass% or less, 62 mass% or less, 61 mass% or less, 60 mass% or less, 59 mass% or less, 58 mass% or less, 57 mass% or less, 56 mass% or less, 55 mass% or less, 54 mass% or less, 53 mass% or less, 52 mass% or less, 51 mass% or less, 50 mass% or less, 49 mass% or less, 48 mass% or less, 47 mass% or less, 46 mass% or less, 45 mass% or less, 44 mass% or less, 43 mass% or less, 42 mass% or less, 41 mass% or less, 40 mass% or less, 39 mass% or less, 38 mass% or less, 37 mass% or less, 36 mass% or less, 35 mass% or less, 34 mass% or less, 33 mass% or less, 32 mass% or less, 31 mass% or less, 30 mass% or less, 29 mass% or less, 28 mass% or less, 27 mass% or less, 26 mass% or less, 25 mass% or less, 24 mass% or less, 23 mass% or less, 22 mass% or less, 21 mass% or less, 20 mass% or less, 19 mass% or less, 18 mass% or less, 17 mass% or less, 16 mass% or less, 15 mass% or less, 14 mass% or less, 13 mass% or less, 12 mass% or less, or 11 mass% or less.

In the present specification, the "malt ratio" means a value calculated according to the Interpretation Notice on the Liquor Tax Law and the Administrative Ordinance Related to Alcoholic Beverages and the like enforced on April 1, 2018.

In the case where the processed food according to an embodiment of the present invention is a beer-taste beverage, the content of free amino nitrogen (FAN) may be 0.1 mg/100 mL or more, 0.3 mg/100 mL or more, 0.5 mg/100 mL or more, 0.7 mg/100 mL or more, 1.0 mg/100 mL or more, 1.5 mg/100 mL or more, 2.0 mg/100 mL or more, 2.5 mg/100 mL or more, 3.0 mg/100 mL or more, 3.5 mg/100 mL or more, 4.0 mg/100 mL or more, 4.5 mg/100 mL or more, 5.0 mg/100 mL or more, 5.5 mg/100 mL or more, 6.0 mg/100 mL or more, 6.5 mg/100 mL or more, 7.0 mg/100 mL or more, 7.5 mg/100 mL or more, 8.0 mg/100 mL or more, 8.5 mg/100 mL or more, 9.0 mg/100 mL or more, 9.5 mg/100 mL or more, 10.0 mg/100 mL or more, or 10.5 mg/100 mL or more, and may be 40.0 mg/100 mL or less, 35.0 mg/100 mL or less, 30.0 mg/100 mL or less, 29.0 mg/100 mL or less, 28.0 mg/100 mL or less, 27.0 mg/100 mL or less, 26.0 mg/100 mL or less, 25.0 mg/100 mL or less, 24.0 mg/100 mL or less, 23.0 mg/100 mL or less, 22.0 mg/100 mL or less, 21.0 mg/100 mL or less, 20.0 mg/100 mL or less, 19.0 mg/100 mL or less, 18.0 mg/100 mL or less, 17.0 mg/100 mL or less, 16.0 mg/100 mL or less, 15.0 mg/100 mL or less, 14.0 mg/100 mL or less, 13.0 mg/100 mL or less, 12.0 mg/100 mL or less, or 11.0 mg/100 mL or less.

The content of FAN can be adjusted by appropriately setting the addition of diluting water or carbonated water, the types of raw materials (such as malt, corn grits, and sugar solution), the amounts of raw materials, the type of enzyme, the amount of enzyme added (also including a proteolytic enzyme), the timing of enzyme addition, the time for proteolysis in a preparation tank, the pH in a preparation tank, the pH in the preparation step (wort production step from feeding of malt until before addition of yeast), the time for wort filtration, the set temperature and holding time in each temperature region in preparation of wort, the boiling time and pH in the boiling step, the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of FAN can be measured, for example, by a method described in 8.18 Free Amino Nitrogen of Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food according to an embodiment of the present invention is a beer-taste beverage, the apparent fermentation degree may be 0% or more, 5% or more, 10% or more, 15% or more, 20% or more, 25% or more, 30% or more, 35% or more, 40% or more, or 50% or more, and may be 120% or less, 115% or less, 110% or less, 105% or less, 100% or less, 95% or less, 90% or less, 85% or less, 80% or less, 75% or less, 70% or less, 65% or less, 60% or less, or 55% or less.

The apparent fermentation degree can be adjusted by appropriately setting the addition of diluting water or

carbonated water, the types of raw materials (such as malt, corn grits, and sugar solution), the amounts of raw materials, the type of enzyme, the amount of enzyme added (also including a saccharolytic enzyme or an isomerase), the temperature in enzymatic reaction, the timing of enzyme addition, the saccharification time, the pH during saccharification, the temperature during saccharification, the pH in the preparation step (wort production step from feeding of malt until before addition of yeast), the temperature in the preparation step, the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In the present specification, the "apparent fermentation degree" means the ratio of the concentration of sugar that can be consumed by yeast as a nutrient source for alcoholic fermentation to the total concentration of sugar contained in the pre-fermentation liquid. For example, the apparent fermentation degree AA of the beer-taste beverage can be calculated from Equation (1) below.

$$\text{Equation (1): } AA\ (\%) = 100 \times (P - Es)/P$$

In Equation (1) above, "P" is an original extract concentration (original wort extract concentration) and can be measured by the method described in "BCOJ Beer Analysis Method" (published by The Brewing Society of Japan, edited by Brewers Association of Japan, revised edition of November 1, 2004).

In addition, "Es" represents an apparent extract concentration of the beer-taste beverage. The apparent extract concentration can be calculated, for example, from Equation (2) below as described in "BCOJ Beer Analysis Method" (published by The Brewing Society of Japan, edited by Brewers Association of Japan, revised edition of November 1, 2004).

$$\text{Equation (2): } Es = -460.234 + 662.649 \times D - 202.414 \times D^2$$

where D is the specific gravity of a degassed beer-taste beverage.

The apparent extract concentration "Es" may have a negative value depending on D in Equation (2) above, and thus the calculated apparent fermentation degree may exceed 100%.

In the case where the processed food according to an embodiment of the present invention is a beer-taste beverage, the sugar content may be 0.1 g/100 mL or more, 0.2 g/100 mL or more, 0.3 g/100 mL or more, 0.4 g/100 mL or more, 0.5 g/100 mL or more, 0.6 g/100 mL or more, 0.7 g/100 mL or more, 0.8 g/100 mL or more, 0.9 g/100 mL or more, 1.0 g/100 mL or more, 1.1 g/100 mL or more, 1.2 g/100 mL or more, 1.3 g/100 mL or more, 1.4 g/100 mL or more, 1.5 g/100 mL or more, 1.6 g/100 mL or more, 1.7 g/100 mL or more, 1.8 g/100 mL or more, 1.9 g/100 mL or more, 2.0 g/100 mL or more, 2.1 g/100 mL or more, 2.2 g/100 mL or more, 2.3 g/100 mL or more, 2.4 g/100 mL or more, 2.5 g/100 mL or more, 2.6 g/100 mL or more, 2.7 g/100 mL or more, 2.8 g/100 mL or more, 2.9 g/100 mL or more, 3.0 g/100 mL or more, 3.1 g/100 mL or more, 3.2 g/100 mL or more, 3.3 g/100 mL or more, 3.4 g/100 mL or more, 3.5 g/100 mL or more, 3.6 g/100 mL or more, 3.7 g/100 mL or more, 3.8 g/100 mL or more, 3.9 g/100 mL or more, 4.0 g/100 mL or more, 4.1 g/100 mL or more, 4.2 g/100 mL or more, 4.3 g/100 mL or more, 4.4 g/100 mL or more, 4.5 g/100 mL or more, 4.6 g/100 mL or more, 4.7 g/100 mL or more, 4.8 g/100 mL or more, 4.9 g/100 mL or more, 5.0 g/100 mL or more, 5.1 g/100 mL or more, 5.2 g/100 mL or more, 5.3 g/100 mL or more, 5.4 g/100 mL or more, 5.5 g/100 mL or more, 5.6 g/100 mL or more, 5.7 g/100 mL or more, 5.8 g/100 mL or more, 5.9 g/100 mL or more, 6.0 g/100 mL or more, 6.1 g/100 mL or more, 6.2 g/100 mL or more, 6.3 g/100 mL or more, 6.4 g/100 mL or more, 6.5 g/100 mL or more, 6.6 g/100 mL or more, 6.7 g/100 mL or more, 6.8 g/100 mL or more, 6.9 g/100 mL or more, 7.0 g/100 mL or more, 7.1 g/100 mL or more, 7.2 g/100 mL or more, 7.3 g/100 mL or more, 7.4 g/100 mL or more, 7.5 g/100 mL or more, 7.6 g/100 mL or more, 7.7 g/100 mL or more, 7.8 g/100 mL or more, 7.9 g/100 mL or more, 8.0 g/100 mL or more, 8.1 g/100 mL or more, 8.2 g/100 mL or more, 8.3 g/100 mL or more, 8.4 g/100 mL or more, 8.5 g/100 mL or more, 8.6 g/100 mL or more, 8.7 g/100 mL or more, 8.8 g/100 mL or more, 8.9 g/100 mL or more, 9.0 g/100 mL or more, 9.1 g/100 mL or more, 9.2 g/100 mL or more, 9.3 g/100 mL or more, 9.4 g/100 mL or more, 9.5 g/100 mL or more, 9.6 g/100 mL or more, 9.7 g/100 mL or more, 9.8 g/100 mL or more, 9.9 g/100 mL or more, 10.0 g/100 mL or more, 10.1 g/100 mL or more, 10.2 g/100 mL or more, 10.3 g/100 mL or more, 10.4 g/100 mL or more, 10.5 g/100 mL or more, 10.6 g/100 mL or more, 10.7 g/100 mL or more, 10.8 g/100 mL or more, 10.9 g/100 mL or more, 11.0 g/100 mL or more, 11.1 g/100 mL or more, 11.2 g/100 mL or more, 11.3 g/100 mL or more, 11.4 g/100 mL or more, 11.5 g/100 mL or more, 11.6 g/100 mL or more, 11.7 g/100 mL or more, 11.8 g/100 mL or more, 11.9 g/100 mL or more, 12.0 g/100 mL or more, 12.1 g/100 mL or more, 12.2 g/100 mL or more, 12.3 g/100 mL or more, 12.4 g/100 mL or more, 12.5 g/100 mL or more, 12.6 g/100 mL or more, 12.7 g/100 mL or more, 12.8

g/100 mL or more, 12.9 g/100 mL or more, 13.0 g/100 mL or more, 13.1 g/100 mL or more, 13.2 g/100 mL or more, 13.3 g/100 mL or more, 13.4 g/100 mL or more, 13.5 g/100 mL or more, 13.6 g/100 mL or more, 13.7 g/100 mL or more, 13.8 g/100 mL or more, 13.9 g/100 mL or more, 14.0 g/100 mL or more, 14.1 g/100 mL or more, 14.2 g/100 mL or more, 14.3 g/100 mL or more, 14.4 g/100 mL or more, 14.5 g/100 mL or more, 14.6 g/100 mL or more, 14.7 g/100 mL or more, 14.8 g/100 mL or more, 14.9 g/100 mL or more, 15.0 g/100 mL or more, 15.1 g/100 mL or more, 15.2 g/100 mL or more, 15.3 g/100 mL or more, 15.4 g/100 mL or more, 15.5 g/100 mL or more, 15.6 g/100 mL or more, 15.7 g/100 mL or more, 15.8 g/100 mL or more, 15.9 g/100 mL or more, 16.0 g/100 mL or more, 16.1 g/100 mL or more, 16.2 g/100 mL or more, 16.3 g/100 mL or more, 16.4 g/100 mL or more, 16.5 g/100 mL or more, 16.6 g/100 mL or more, 16.7 g/100 mL or more, 16.8 g/100 mL or more, 16.9 g/100 mL or more, 17.0 g/100 mL or more, 17.1 g/100 mL or more, 17.2 g/100 mL or more, 17.3 g/100 mL or more, 17.4 g/100 mL or more, 17.5 g/100 mL or more, 17.6 g/100 mL or more, 17.7 g/100 mL or more, 17.8 g/100 mL or more, 17.9 g/100 mL or more, 18.0 g/100 mL or more, 18.1 g/100 mL or more, 18.2 g/100 mL or more, 18.3 g/100 mL or more, 18.4 g/100 mL or more, 18.5 g/100 mL or more, 18.6 g/100 mL or more, 18.7 g/100 mL or more, 18.8 g/100 mL or more, 18.9 g/100 mL or more, 19.0 g/100 mL or more, 19.1 g/100 mL or more, 19.2 g/100 mL or more, 19.3 g/100 mL or more, 19.4 g/100 mL or more, 19.5 g/100 mL or more, 19.6 g/100 mL or more, 19.7 g/100 mL or more, 19.8 g/100 mL or more, or 19.9 g/100 mL or more, and may be 20 g/100 mL or less, 19.9 g/100 mL or less, 19.8 g/100 mL or less, 19.7 g/100 mL or less, 19.6 g/100 mL or less, 19.5 g/100 mL or less, 19.4 g/100 mL or less, 19.3 g/100 mL or less, 19.2 g/100 mL or less, 19.1 g/100 mL or less, 19 g/100 mL or less, 18.9 g/100 mL or less, 18.8 g/100 mL or less, 18.7 g/100 mL or less, 18.6 g/100 mL or less, 18.5 g/100 mL or less, 18.4 g/100 mL or less, 18.3 g/100 mL or less, 18.2 g/100 mL or less, 18.1 g/100 mL or less, 18 g/100 mL or less, 17.9 g/100 mL or less, 17.8 g/100 mL or less, 17.7 g/100 mL or less, 17.6 g/100 mL or less, 17.5 g/100 mL or less, 17.4 g/100 mL or less, 17.3 g/100 mL or less, 17.2 g/100 mL or less, 17.1 g/100 mL or less, 17 g/100 mL or less, 16.9 g/100 mL or less, 16.8 g/100 mL or less, 16.7 g/100 mL or less, 16.6 g/100 mL or less, 16.5 g/100 mL or less, 16.4 g/100 mL or less, 16.3 g/100 mL or less, 16.2 g/100 mL or less, 16.1 g/100 mL or less, 16 g/100 mL or less, 15.9 g/100 mL or less, 15.8 g/100 mL or less, 15.7 g/100 mL or less, 15.6 g/100 mL or less, 15.5 g/100 mL or less, 15.4 g/100 mL or less, 15.3 g/100 mL or less, 15.2 g/100 mL or less, 15.1 g/100 mL or less, 15 g/100 mL or less, 14.9 g/100 mL or less, 14.8 g/100 mL or less, 14.7 g/100 mL or less, 14.6 g/100 mL or less, 14.5 g/100 mL or less, 14.4 g/100 mL or less, 14.3 g/100 mL or less, 14.2 g/100 mL or less, 14.1 g/100 mL or less, 14 g/100 mL or less, 13.9 g/100 mL or less, 13.8 g/100 mL or less, 13.7 g/100 mL or less, 13.6 g/100 mL or less, 13.5 g/100 mL or less, 13.4 g/100 mL or less, 13.3 g/100 mL or less, 13.2 g/100 mL or less, 13.1 g/100 mL or less, 13 g/100 mL or less, 12.9 g/100 mL or less, 12.8 g/100 mL or less, 12.7 g/100 mL or less, 12.6 g/100 mL or less, 12.5 g/100 mL or less, 12.4 g/100 mL or less, 12.3 g/100 mL or less, 12.2 g/100 mL or less, 12.1 g/100 mL or less, 12 g/100 mL or less, 11.9 g/100 mL or less, 11.8 g/100 mL or less, 11.7 g/100 mL or less, 11.6 g/100 mL or less, 11.5 g/100 mL or less, 11.4 g/100 mL or less, 11.3 g/100 mL or less, 11.2 g/100 mL or less, 11.1 g/100 mL or less, 11 g/100 mL or less, 10.9 g/100 mL or less, 10.8 g/100 mL or less, 10.7 g/100 mL or less, 10.6 g/100 mL or less, 10.5 g/100 mL or less, 10.4 g/100 mL or less, 10.3 g/100 mL or less, 10.2 g/100 mL or less, 10.1 g/100 mL or less, 10 g/100 mL or less, 9.9 g/100 mL or less, 9.8 g/100 mL or less, 9.7 g/100 mL or less, 9.6 g/100 mL or less, 9.5 g/100 mL or less, 9.4 g/100 mL or less, 9.3 g/100 mL or less, 9.2 g/100 mL or less, 9.1 g/100 mL or less, 9.0 g/100 mL or less, 8.9 g/100 mL or less, 8.8 g/100 mL or less, 8.7 g/100 mL or less, 8.6 g/100 mL or less, 8.5 g/100 mL or less, 8.4 g/100 mL or less, 8.3 g/100 mL or less, 8.2 g/100 mL or less, 8.1 g/100 mL or less, 8.0 g/100 mL or less, 7.9 g/100 mL or less, 7.8 g/100 mL or less, 7.7 g/100 mL or less, 7.6 g/100 mL or less, 7.5 g/100 mL or less, 7.4 g/100 mL or less, 7.3 g/100 mL or less, 7.2 g/100 mL or less, 7.1 g/100 mL or less, 7.0 g/100 mL or less, 6.9 g/100 mL or less, 6.8 g/100 mL or less, 6.7 g/100 mL or less, 6.6 g/100 mL or less, 6.5 g/100 mL or less, 6.4 g/100 mL or less, 6.3 g/100 mL or less, 6.2 g/100 mL or less, 6.1 g/100 mL or less, 6.0 g/100 mL or less, 5.9 g/100 mL or less, 5.8 g/100 mL or less, 5.7 g/100 mL or less, 5.6 g/100 mL or less, 5.5 g/100 mL or less, 5.4 g/100 mL or less, 5.3 g/100 mL or less, 5.2 g/100 mL or less, 5.1 g/100 mL or less, 5.0 g/100 mL or less, 4.9 g/100 mL or less, 4.8 g/100 mL or less, 4.7 g/100 mL or less, 4.6 g/100 mL or less, 4.5 g/100 mL or less, 4.4 g/100 mL or less, 4.3 g/100 mL or less, 4.2 g/100 mL or less, 4.1 g/100 mL or less, 4.0 g/100 mL or less, 3.9 g/100 mL or less, 3.8 g/100 mL or less, 3.7 g/100 mL or less, 3.6 g/100 mL or less, 3.5 g/100 mL or less, 3.4 g/100 mL or less, 3.3 g/100 mL or less, 3.2 g/100 mL or less, 3.1 g/100 mL or less, 3.0 g/100 mL or less, 2.9 g/100 mL or less, 2.8 g/100 mL or less, 2.7 g/100 mL or less, 2.6 g/100 mL or less, 2.5 g/100 mL or less, 2.4 g/100 mL or less, 2.3 g/100 mL or less, 2.2 g/100 mL or less, 2.1 g/100 mL or less, or 2.0 g/100 mL or less.

In addition, the beer-taste beverage may be a low-sugar beverage or a sugar-free beverage, and the specific sugar content may be less than 2.0 g/100 mL, 1.9 g/100 mL or less, 1.8 g/100 mL or less, 1.7 g/100 mL or less, 1.6 g/100 mL or less, 1.5 g/100 mL or less, 1.4 g/100 mL or less, 1.3 g/100 mL or less, 1.2 g/100 mL or less, 1.1 g/100 mL or less, 1.0 g/100 mL or less, less than 1.0 g/100 mL, 0.9 g/100 mL or less, 0.8 g/100 mL or less, 0.7 g/100 mL or less, 0.6 g/100 mL or less, 0.5 g/100 mL or less, less than 0.5 g/100 mL, 0.4 g/100 mL or less, 0.3 g/100 mL or less, or 0.2 g/100 mL or less.

The sugar content can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition,

the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the "sugar" in the present specification refers to a sugar based on the Nutrition Labeling Standards for Foods (Ministry of Health, Labour and Welfare Notification No. 176, 2003, Consumer Affairs Agency Notification No. 8, Partial Revision, September 27, 2013) and specifically means a material obtained by removing protein, lipid, dietary fiber, ash, alcohol content, and water from the target food. Thus, the amount of sugar in a food can be calculated by subtracting the amounts of protein, lipid, dietary fiber, ash, and water from the weight of the food.

Here, the amounts of protein, lipid, dietary fiber, ash, and water can be measured by the methods described in the Nutrition Labeling Standards. Specifically, the amount of protein can be measured by a method of quantitative conversion of nitrogen, the amount of lipid can be measured by an ether extraction method, the amount of dietary fiber can be measured by the Prosky method, the amount of ash can be measured by a direct ashing method, and the amount of water can be measured by a method of heating and drying under reduced pressure.

In the case where the processed food according to an embodiment of the present invention is a beer-taste beverage, the content of dietary fiber may be 0 g/100 mL or more, 0.1 g/100 mL or more, 0.2 g/100 mL or more, 0.3 g/100 mL or more, 0.4 g/100 mL or more, or 0.5 g/100 mL or more, and 5.0 g/100 mL or less, 4.5 g/100 mL or less, 4.0 g/100 mL or less, 3.5 g/100 mL or less, 3.0 g/100 mL or less, 2.5 g/100 mL or less, 2.0 g/100 mL or less, 1.5 g/100 L or less, or 1.0 g/100 mL or less.

"Dietary fiber" is a general term for indigestible components which are contained in foods and are not digested or hardly digested by digestive enzymes in the human stomach, intestine, or the like, and is broadly divided into water-soluble dietary fiber, which is water-soluble, and insoluble dietary fiber, which is insoluble in water.

Examples of the water-soluble dietary fiber include indigestible dextrin, polydextrose, guar gum degradation products, pectin, glucomannan, alginic acid, laminarin, fucoidin, and carrageenan. In addition, examples of the insoluble dietary fiber include cellulose, hemicellulose, lignin, chitin, and chitosan.

In the present invention, the dietary fiber may be not only a dietary fiber incorporated by addition but also a dietary fiber originating from a raw material or a dietary fiber originating from an animal or plant, and the origin is not particularly limited.

The content of dietary fiber can be adjusted by appropriately setting the addition of diluting water or carbonated water, the types of raw materials (such as malt, corn grits, and sugar solution), the amounts of raw materials, the type of enzyme, the amount of enzyme added (also including a saccharolytic enzyme or an isomerase), the timing of enzyme addition, the saccharification time, the pH during saccharification, the pH in the preparation step (wort production step from feeding of malt until before addition of yeast), the time for wort filtration, the set temperature and holding time in each temperature region in preparation of wort (including during saccharification), the original wort extract concentration in the pre-fermentation liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, in the present specification, the content of dietary fiber can be measured by the Prosky method.

In the case where the processed food according to an embodiment of the present invention is a beer-taste beverage, the total polyphenol amount may be 0 mass ppm or more, 5 mass ppm or more, 10 mass ppm or more, 15 mass ppm or more, 20 mass ppm or more, 25 mass ppm or more, 30 mass ppm or more, 35 mass ppm or more, 40 mass ppm or more, 45 mass ppm or more, 50 mass ppm or more, 55 mass ppm or more, 60 mass ppm or more, 65 mass ppm or more, 70 mass ppm or more, 75 mass ppm or more, 80 mass ppm or more, 85 mass ppm or more, 90 mass ppm or more, 95 mass ppm or more, 100 mass ppm or more, 110 mass ppm or more, 120 mass ppm or more, 130 mass ppm or more, 140 mass ppm or more, 150 mass ppm or more, 160 mass ppm or more, or 170 mass ppm or more, and may be 300 mass ppm or less, 290 mass ppm or less, 280 mass ppm or less, 270 mass ppm or less, 260 mass ppm or less, 250 mass ppm or less, 240 mass ppm or less, 230 mass ppm or less, 220 mass ppm or less, 210 mass ppm or less, 200 mass ppm or less, 190 mass ppm or less, or 180 mass ppm or less.

The total polyphenol amount can be adjusted by appropriately setting the addition of diluting water or carbonated water, the types of raw materials (such as malt, corn grits, and sugar solution), the amounts of raw materials, the type of enzyme, the amount of enzyme added, the timing of enzyme addition, aeration time in a preparation tank (such as mash aeration), the pH in a preparation tank, the pH in the preparation step (wort production step from feeding of malt until before addition of yeast), the time for wort filtration, the set temperature and holding time in each temperature region in preparation of wort (including during saccharification), the original wort extract concentration in the pre-fermentation

liquid, the original wort extract concentration in the fermentation step, the fermentation conditions (such as the oxygen concentration, aeration conditions, yeast species, amount of yeast added, the number of yeast grown, removal timing of yeast, fermentation temperature, fermentation time, pressure setting, and carbon dioxide concentration), and the like.

In addition, the total polyphenol amount can be controlled by adjusting the usage amount of a raw material with a high polyphenol content, such as barley malt or malt husks (hulls). Specifically, the total polyphenol amount can be increased by increasing the usage amount of a raw material with a high polyphenol content, such as malt.

In addition, in the present specification, the total polyphenol amount can be measured, for example, by a method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food according to an embodiment of the present invention is a beer-taste beverage, the content of proline may be 0 mg/100 mL or more, 0.1 mg/100 mL or more, 0.5 mg/100 mL or more, 1.0 mg/100 mL or more, 2.0 mg/100 mL or more, 3.0 mg/100 mL or more, 4.0 mg/100 mL or more, 5.0 mg/100 mL or more, 6.0 mg/100 mL or more, 7.0 mg/100 mL or more, 8.0 mg/100 mL or more, 9.0 mg/100 mL or more, 10.0 mg/100 mL or more, 12.0 mg/100 mL or more, 15.0 mg/100 mL or more, 17.0 mg/100 mL or more, 20.0 mg/100 mL or more, 25.0 mg/100 mL or more, 30.0 mg/100 mL or more, 35.0 mg/100 mL or more, 40.0 mg/100 mL or more, 45.0 mg/100 mL or more, 50.0 mg/100 mL or more, 55.0 mg/100 mL or more, 60.0 mg/100 mL or more, 65.0 mg/100 mL or more, 70.0 mg/100 mL or more, 75.0 mg/100 mL or more, 80.0 mg/100 mL or more, 85.0 mg/100 mL or more, 90.0 mg/100 mL or more, 95.0 mg/100 mL or more, 100 mg/100 mL or more, 105 mg/100 mL or more, 110 mg/100 mL or more, 115 mg/100 mL or more, 120 mg/100 mL or more, 125 mg/100 mL or more, 130 mg/100 mL or more, 135 mg/100 mL or more, 140 mg/100 mL or more, 145 mg/100 mL or more, 150 mg/100 mL or more, 155 mg/100 mL or more, 160 mg/100 mL or more, 165 mg/100 mL or more, 170 mg/100 mL or more, 175 mg/100 mL or more, 180 mg/100 mL or more, 185 mg/100 mL or more, 190 mg/100 mL or more, 195 mg/100 mL or more, 200 mg/100 mL or more, 205 mg/100 mL or more, 210 mg/100 mL or more, 215 mg/100 mL or more, 220 mg/100 mL or more, 225 mg/100 mL or more, 230 mg/100 mL or more, 235 mg/100 mL or more, 240 mg/100 mL or more, 245 mg/100 mL or more, 250 mg/100 mL or more, 255 mg/100 mL or more, 260 mg/100 mL or more, 265 mg/100 mL or more, 270 mg/100 mL or more, 275 mg/100 mL or more, 280 mg/100 mL or more, 285 mg/100 mL or more, 290 mg/100 mL or more, or 295 mg/100 mL or more, and may be 300 mg/100 mL or less, 295 mg/100 mL or less, 290 mg/100 mL or less, 285 mg/100 mL or less, 280 mg/100 mL or less, 275 mg/100 mL or less, 270 mg/100 mL or less, 265 mg/100 mL or less, 260 mg/100 mL or less, 255 mg/100 mL or less, 250 mg/100 mL or less, 245 mg/100 mL or less, 240 mg/100 mL or less, 235 mg/100 mL or less, 230 mg/100 mL or less, 225 mg/100 mL or less, 220 mg/100 mL or less, 215 mg/100 mL or less, 210 mg/100 mL or less, 205 mg/100 mL or less, 200 mg/100 mL or less, 195 mg/100 mL or less, 190 mg/100 mL or less, 185 mg/100 mL or less, 180 mg/100 mL or less, 175 mg/100 mL or less, 170 mg/100 mL or less, 165 mg/100 mL or less, 160 mg/100 mL or less, 155 mg/100 mL or less, 150 mg/100 mL or less, 145 mg/100 mL or less, 140 mg/100 mL or less, 135 mg/100 mL or less, 130 mg/100 mL or less, 125 mg/100 mL or less, 120 mg/100 mL or less, 115 mg/100 mL or less, 110 mg/100 mL or less, 105 mg/100 mL or less, 100 mg/100 mL or less, 95 mg/100 mL or less, 90 mg/100 mL or less, 85 mg/100 mL or less, 80 mg/100 mL or less, 75 mg/100 mL or less, 70 mg/100 mL or less, 65 mg/100 mL or less, 60 mg/100 mL or less, 55 mg/100 mL or less, 50 mg/100 mL or less, 45 mg/100 mL or less, 40 mg/100 mL or less, 35 mg/100 mL or less, 30 mg/100 mL or less, 25 mg/100 mL or less, 20 mg/100 mL or less, or 15 mg/100 mL.

Proline is a type of amino acid that is contained in a relatively large amount in barley, such as malt, and whose content does not change much before and after the fermentation step. Adjusting the content of proline allows results in a beer-taste beverage with even better taste.

In the present specification, the content of proline can be measured, for example, using an automatic amino acid analyzer L-8800A available from Hitachi, Ltd. or the like.

In the case where the processed food according to an embodiment of the present invention is a beer-taste beverage, from the viewpoint of making a beverage with excellent taste typical of a beer-taste beverage, the original wort extract concentration may be 5.0 mass% or more, 5.1 mass% or more, 5.2 mass% or more, 5.3 mass% or more, 5.4 mass% or more, 5.5 mass% or more, 5.6 mass% or more, 5.7 mass% or more, 5.8 mass% or more, 5.9 mass% or more, 6.0 mass% or more, 6.1 mass% or more, 6.2 mass% or more, 6.3 mass% or more, 6.4 mass% or more, 6.5 mass% or more, 6.6 mass% or more, 6.7 mass% or more, 6.8 mass% or more, 6.9 mass% or more, 7.0 mass% or more, 7.1 mass% or more, 7.2 mass% or more, 7.3 mass% or more, 7.4 mass% or more, 7.5 mass% or more, 7.6 mass% or more, 7.7 mass% or more, 7.8 mass% or more, 7.9 mass% or more, 8.0 mass% or more, 8.1 mass% or more, 8.2 mass% or more, 8.3 mass% or more, 8.4 mass% or more, 8.5 mass% or more, 8.6 mass% or more, 8.7 mass% or more, 8.8 mass% or more, 8.9 mass% or more, 9.0 mass% or more, 9.1 mass% or more, 9.2 mass% or more, 9.3 mass% or more, 9.4 mass% or more, 9.5 mass% or more, 9.6 mass% or more, 9.7 mass% or more, 9.8 mass% or more, 9.9 mass% or more, 10.0 mass% or more, 10.1 mass% or more, 10.2 mass% or more, 10.3 mass% or more, 10.4 mass% or more, 10.5 mass% or more, 10.6 mass% or more, 10.7 mass% or more, 10.8 mass% or more, 10.9 mass% or more, 11.0 mass% or more, 11.1 mass% or more, 11.2 mass% or more, 11.3 mass% or more, 11.4 mass% or more, 11.5

mass% or more, 11.6 mass% or more, 11.7 mass% or more, 11.8 mass% or more, 11.9 mass% or more, 12.0 mass% or more, 12.1 mass% or more, 12.2 mass% or more, 12.3 mass% or more, 12.4 mass% or more, 12.5 mass% or more, 12.6 mass% or more, 12.7 mass% or more, 12.8 mass% or more, 12.9 mass% or more, 13.0 mass% or more, 13.1 mass% or more, 13.2 mass% or more, 13.3 mass% or more, 13.4 mass% or more, 13.5 mass% or more, 13.6 mass% or more, 13.7 mass% or more, 13.8 mass% or more, 13.9 mass% or more, 14.0 mass% or more, 14.1 mass% or more, 14.2 mass% or more, 14.3 mass% or more, 14.4 mass% or more, 14.5 mass% or more, 14.6 mass% or more, 14.7 mass% or more, 14.8 mass% or more, 14.9 mass% or more, 15.0 mass% or more, 15.1 mass% or more, 15.2 mass% or more, 15.3 mass% or more, 15.4 mass% or more, 15.5 mass% or more, 15.6 mass% or more, 15.7 mass% or more, 15.8 mass% or more, 15.9 mass% or more, 16.0 mass% or more, 16.1 mass% or more, 16.2 mass% or more, 16.3 mass% or more, 16.4 mass% or more, 16.5 mass% or more, 16.6 mass% or more, 16.7 mass% or more, 16.8 mass% or more, 16.9 mass% or more, 17.0 mass% or more, 17.1 mass% or more, 17.2 mass% or more, 17.3 mass% or more, 17.4 mass% or more, 17.5 mass% or more, 17.6 mass% or more, 17.7 mass% or more, 17.8 mass% or more, 17.9 mass% or more, 18.0 mass% or more, 18.1 mass% or more, 18.2 mass% or more, 18.3 mass% or more, 18.4 mass% or more, 18.5 mass% or more, 18.6 mass% or more, 18.7 mass% or more, 18.8 mass% or more, 18.9 mass% or more, 19.0 mass% or more, 19.1 mass% or more, 19.2 mass% or more, 19.3 mass% or more, 19.4 mass% or more, 19.5 mass% or more, 19.6 mass% or more, 19.7 mass% or more, 19.8 mass% or more, or 19.9 mass% or more, and from the view point of making a beverage with distinguished refreshing aroma and sweet aroma typical of a beer-taste beverage, the original wort extract concentration may be 20.0 mass% or less, 19.9 mass% or less, 19.8 mass% or less, 19.7 mass% or less, 19.6 mass% or less, 19.5 mass% or less, 19.4 mass% or less, 19.3 mass% or less, 19.2 mass% or less, 19.1 mass% or less, 19.0 mass% or less, 18.9 mass% or less, 18.8 mass% or less, 18.7 mass% or less, 18.6 mass% or less, 18.5 mass% or less, 18.4 mass% or less, 18.3 mass% or less, 18.2 mass% or less, 18.1 mass% or less, 18.0 mass% or less, 17.9 mass% or less, 17.8 mass% or less, 17.7 mass% or less, 17.6 mass% or less, 17.5 mass% or less, 17.4 mass% or less, 17.3 mass% or less, 17.2 mass% or less, 17.1 mass% or less, 17.0 mass% or less, 16.9 mass% or less, 16.8 mass% or less, 16.7 mass% or less, 16.6 mass% or less, 16.5 mass% or less, 16.4 mass% or less, 16.3 mass% or less, 16.2 mass% or less, 16.1 mass% or less, 16.0 mass% or less, 15.9 mass% or less, 15.8 mass% or less, 15.7 mass% or less, 15.6 mass% or less, 15.5 mass% or less, 15.4 mass% or less, 15.3 mass% or less, 15.2 mass% or less, 15.1 mass% or less, 15.0 mass% or less, 14.9 mass% or less, 14.8 mass% or less, 14.7 mass% or less, 14.6 mass% or less, 14.5 mass% or less, 14.4 mass% or less, 14.3 mass% or less, 14.2 mass% or less, 14.1 mass% or less, 14.0 mass% or less, 13.9 mass% or less, 13.8 mass% or less, 13.7 mass% or less, 13.6 mass% or less, 13.5 mass% or less, 13.4 mass% or less, 13.3 mass% or less, 13.2 mass% or less, 13.1 mass% or less, 13.0 mass% or less, 12.9 mass% or less, 12.8 mass% or less, 12.7 mass% or less, 12.6 mass% or less, 12.5 mass% or less, 12.4 mass% or less, 12.3 mass% or less, 12.2 mass% or less, 12.1 mass% or less, 12.0 mass% or less, 11.9 mass% or less, 11.8 mass% or less, 11.7 mass% or less, 11.6 mass% or less, 11.5 mass% or less, 11.4 mass% or less, 11.3 mass% or less, 11.2 mass% or less, 11.1 mass% or less, 11.0 mass% or less, 10.9 mass% or less, 10.8 mass% or less, 10.7 mass% or less, 10.6 mass% or less, 10.5 mass% or less, 10.4 mass% or less, 10.3 mass% or less, 10.2 mass% or less, 10.1 mass% or less, 10.0 mass% or less, 9.9 mass% or less, 9.8 mass% or less, 9.7 mass% or less, 9.6 mass% or less, 9.5 mass% or less, 9.4 mass% or less, 9.3 mass% or less, 9.2 mass% or less, 9.1 mass% or less, 9.0 mass% or less, 8.9 mass% or less, 8.8 mass% or less, 8.7 mass% or less, 8.6 mass% or less, 8.5 mass% or less, 8.4 mass% or less, 8.3 mass% or less, 8.2 mass% or less, 8.1 mass% or less, 8.0 mass% or less, 7.9 mass% or less, 7.8 mass% or less, 7.7 mass% or less, 7.6 mass% or less, 7.5 mass% or less, 7.4 mass% or less, 7.3 mass% or less, 7.2 mass% or less, 7.1 mass% or less, 7.0 mass% or less, 6.9 mass% or less, 6.8 mass% or less, 6.7 mass% or less, 6.6 mass% or less, 6.5 mass% or less, 6.4 mass% or less, 6.3 mass% or less, 6.2 mass% or less, 6.1 mass% or less, 6.0 mass% or less, 5.9 mass% or less, 5.8 mass% or less, 5.7 mass% or less, 5.6 mass% or less, 5.5 mass% or less, 5.4 mass% or less, 5.3 mass% or less, 5.2 mass% or less, or 5.1 mass% or less.

The "original wort extract concentration"in the present specification can be measured by the method described in "BCOJ Beer Analysis Method" (published by The Brewing Society of Japan, edited by Brewers Association of Japan, revised edition of November 1, 2004).

In the case where the processed food according to an embodiment of the present invention is a beer-taste beverage, the bitterness value of the beverage is, from the viewpoint of making a beverage typical of a beer-taste beverage, preferably less than 60 BUs, more preferably 55 BUs or less, even more preferably 50 BUs or less, still more preferably 45 BUs or less, particularly preferably 40 BUs or less, or may be 35 BUs or less, 30 BUs or less, or 25 BUs or less.

In the case where the processed food according to an embodiment of the present invention is a beer-taste beverage made using hops as a raw material, the bitterness value of the beverage may be 5 BUs or more, 7 BUs or more, 10 BUs or more, 12 BUs or more, 15 BUs or more, or 17 BUs or more.

In addition, in the case where the processed food according to an embodiment of the present invention is a beer-taste beverage made without using hops as a raw material, the bitterness value of the beverage may be less than 5.0 BUs, 3.0 BUs or less, 2.0 BUs or less, 1.0 BUs or less, 0.5 BUs or less, or 0.3 BUs or less.

The bitterness value of the beverage is an index of bitterness imparted by hop-derived components containing

isohumulone as a main component and can be controlled by appropriately adjusting the usage amount of hops or a hop-derived component, such as a hop extract.

In addition, in the present specification, the "bitterness value" of the beverage can be measured by the measurement method described in "8.15 Bitterness Value" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

In the case where the processed food according to an embodiment of the present invention is a beer-taste beverage, the beer-taste beverage may further contain spirits derived from grain as an alcohol component to adjust the alcoholic strength.

Here, the "spirits" means an alcoholic beverage produced by saccharifying grain, such as wheat, barley, rice, buckwheat, or corn, as a raw material using malt or, as necessary, an enzymatic agent, fermenting the saccharified product using yeast, and then distilling the fermented product.

Among these, from the viewpoint of making a beverage with good taste, the beer-taste beverage, a processed food according to an embodiment of the present invention, preferably contains spirits made from a plant belonging to the family *Gramineae* as a raw material, preferably contains spirits of barley or the like, and more preferably contains barley spirits or wheat spirits.

In the case where the processed food according to an embodiment of the present invention is a beer-taste beverage, the color of the beer-taste beverage is not particularly limited, but the color may be amber or gold like ordinary beer, black like black beer, or colorless and transparent, or may be colored as desired by adding a colorant or the like. The color of the beer-taste beverage can be determined by the naked eye and may be specified by the total light transmittance, chromaticity, or the like.

In the case where the processed food according to an embodiment of the present invention is a beer-taste beverage, from the viewpoint of making a beverage with excellent taste typical of a beer-taste beverage, the chromaticity of the beer-taste beverage is preferably 7.0 EBC or more, more preferably 7.2 EBC or more, even more preferably 7.5 EBC or more, still more preferably 8.0 EBC or more, yet more preferably 8.5 EBC or more, particularly preferably 9.0 EBC or more, and further may be 9.5 EBC or more, 10.0 EBC or more, 10.5 EBC or more, 11.0 EBC or more, 11.5 EBC or more, 12.0 EBC or more, 12.5 EBC or more, or 13.0 EBC or more, and may be 200 EBC or less, 180 EBC or less, 160 EBC or less, 140 EBC or less, 120 EBC or less, 100 EBC or less, 80 EBC or less, 70 EBC or less, 60 EBC or less, 50 EBC or less, 40 EBC or less, 35 EBC or less, 30 EBC or less, 27 EBC or less, 25 EBC or less, 23 EBC or less, 20 EBC or less, 18 EBC or less, 16 EBC or less, or 15 EBC or less.

In the present specification, the "chromaticity" of the beer-taste beverage can be measured by the measurement method described in "8.8 Chromaticity" in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013). The "chromaticity" of the beer-taste beverage is specified by the unit of chromaticity (EBC unit) defined by the European Brewery Convention. A beverage with a smaller numerical value has a lighter and brighter color, whereas a beverage with a larger numerical value has a deeper and darker color.

In addition, the chromaticity of the beer-taste beverage according to an embodiment of the present invention can be controlled, for example, by appropriately adjusting the type of malt used, the blending ratio in the case of using two or more types of malts in combination, or the boiling conditions for preparation of the pre-fermentation liquid. More specifically, for example, to increase the chromaticity of the beer-taste beverage, the chromaticity can be adjusted by increasing the blending ratio of dark malt as the malt, increasing the temperature during boiling treatment, increasing boiling time, performing decoction during preparation of a saccharified liquid. Furthermore, increasing the original wort extract concentration or increasing the malt ratio can also adjust the chromaticity to a higher level.

In the case where the processed food according to an embodiment of the present invention is a beer-taste beverage, the pH of the beer-taste beverage is not particularly limited, but from the viewpoint of preventing the occurrence of microorganisms, the pH may be 5.0 or lower, 4.9 or lower, 4.8 or lower, 4.7 or lower, 4.6 or lower, 4.55 or lower, or 4.5 or lower, and from the viewpoint of improving the flavor of the beer-taste beverage, the pH may be 2.0 or higher, 2.1 or higher, 2.2 or higher, 2.3 or higher, 2.4 or higher, 2.5 or higher, 2.6 or higher, 2.7 or higher, 2.8 or higher, 2.9 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, or 4.2 or higher.

3 Raw material for beverage

In the case where the processed food according to an embodiment of the present invention is a beverage, a raw material commonly used in each beverage can be used. For example, in the case of a beer-taste beverage, water and malt are used as main raw materials. Furthermore, the beer-taste beverage may be a beverage made using hops as a raw material or may be a beverage made without using hops.

In addition, in the case where the processed food according to an embodiment of the present invention is a

beverage, a preservative, a sweetener, a water-soluble dietary fiber, a bittering agent or a bitterness-imparting agent, an antioxidant, a flavoring, an acidulant, a salt, or the like may be used according to the type of each beverage.

The beverage preferably contains a raw material having xanthine oxidase activity as the raw material for the beverage. The raw material having xanthine oxidase activity is described above, and a commercially available preparation of xanthine oxidase may be used as the raw material.

In addition, in the case where the beverage contains a raw material having xanthine oxidase activity as the raw material for the beverage, purines can be converted into uric acid by xanthine oxidase activity, and thus the beverage may contain a raw material containing purines.

The raw material containing purines is described above and is preferably malt in the case where the processed food according to an embodiment of the present invention is a beer-taste beverage.

3.1.1 Malt and grain other than malt

In the case where the processed food according to an embodiment of the present invention is a beer-taste beverage, the malt to be used as the raw material refers to malt obtained by germinating seeds of barley or the like, such as barley, wheat, rye, wild oats, oats, or adlay, drying the germinated seeds, and removing roots, and may be from any production area and of any variety.

The malt used in an embodiment of the present invention is preferably barley malt. Barley malt is one of the malts most commonly used as a raw material for Japanese beer-taste beverages. There are several types of barley, such as two-rowed barley and six-rowed barley, and any of them may be used. Furthermore, in addition to ordinary malt, colored malt or the like can also be used. When colored malt is used, different types of colored malts may be appropriately used in combination, or one colored malt may be used.

In addition, a grain other than malt may be used together with malt.

Examples of such a grain include barley and the like that do not fall under malt (such as barley, wheat, rye, wild oats, oats, and adlay), rice (such as white rice and brown rice), corn, kaoliang, potato, legumes (such as soybeans and peas), buckwheat, sorghum, foxtail millet, Japanese millet, starch resulting therefrom, and extracts thereof.

In the case without using malt, a liquid sugar containing a carbon source can be used, and as a nitrogen source, a yeast extract, a protein derived from an animal or plant, or an amino acid-containing raw material (e.g., such as soy protein) other than malt, such as the grain described above, can be used.

3.1.2 Hops

In the case where the processed food according to an embodiment of the present invention is a beer-taste beverage made using hops, examples of the form of the hops include pellet hops, powdered hops, and hop extract. In addition, the hops used may be a processed hop product, such as isomerized hops or reduced hops.

In the case where the processed food according to an embodiment of the present invention is a beer-taste beverage made using hops, the amount of hops to be added is appropriately adjusted but is preferably from 0.0001 to 1 mass% based on the total amount (100 mass%) of the raw materials for the beverage.

In addition, a beer-taste beverage made using hops as a raw material is a beverage containing iso-$\alpha$-acid, which is a component derived from hops. The content of iso-$\alpha$-acid in the beer-taste beverage made using hops may be more than 0.1 mass ppm or more than 1.0 mass ppm based on the total amount (100 mass%) of the beer-taste beverage.

On the other hand, the content of iso-$\alpha$-acid in a beer-taste beverage made without using hops may be 0.1 mass ppm or less based on the total amount (100 mass%) of the beer-taste beverage.

In the present specification, the content of iso-$\alpha$-acid means a value measured by the high-performance liquid chromatography (HPLC) analysis method described in Revised BCOJ Beer Analysis Method (published by Public Interest Incorporated Foundation, The Brewing Society of Japan, edited by [Analysis Committee] Brewery Convention of Japan, Brewers Association of Japan, Enlarged and Revised Edition of 2013).

3.1.3 Preservative

In the case where the processed food according to an embodiment of the present invention is a beverage, it may be a beverage further blended with a preservative.

Examples of the preservative used in an embodiment of the present invention include benzoic acid; benzoate salts, such as sodium benzoate; benzoate esters, such as propyl parahydroxybenzoate and butyl parahydroxybenzoate; and dimethyl dicarbonate. In addition, for the preservative, a commercially available preparation, such as Kyohryoku Sanpurezah (Powerful Sanplezer) (a mixture of sodium benzoate and butyl benzoate, available from San-Ei Gen F.F.I., Inc.) may be used.

One of these preservatives may be used alone, or two or more of these preservatives may be used in combination.

In the case where the processed food according to an embodiment of the present invention is a beverage blended with a preservative, the content of the preservative is adjusted preferably to 5 to 1200 mass ppm, more preferably to 10 to 1100 mass ppm, even more preferably to 15 to 1000 mass ppm, and even more preferably to 20 to 900 mass ppm based on the total amount (100 mass%) of the beverage.

3.1.4 Sweetener

In the case where the processed food according to an embodiment of the present invention is a beverage, it may be a beverage further blended with a sweetener.

Examples of the sweetener used in an embodiment of the present invention include saccharides obtained by degrading starch derived from grain with an acid, an enzyme, or the like, such as commercially available saccharified liquids and commercially available starch syrup; tri- or higher saccharides; sugar alcohols; natural sweeteners, such as stevia; and artificial sweeteners.

One of these sweeteners may be used alone, or two or more of these sweeteners may be used in combination.

These saccharides may be in the form of a liquid, such as a solution, or a solid, such as a powder.

In addition, there are no particular limitations on the type of raw material grain for starch, the method of purifying starch, and the conditions for treatment, such as hydrolysis with an enzyme or an acid. For example, a saccharide with increased ratio of maltose obtained by appropriately setting conditions for hydrolysis with an enzyme or an acid may be used. In addition, sucrose, fructose, glucose, maltose, trehalose, maltotriose, and a solution thereof (sugar solution) can also be used.

In addition, examples of the artificial sweetener include aspartame, acesulfame potassium (acesulfame K), sucralose, and neotame.

Examples of the water-soluble dietary fiber include indigestible dextrin, polydextrose, guar gum degradation products, pectin, glucomannan, alginic acid, laminarin, fucoidin, and carrageenan. From the viewpoint of versatility, such as stability and safety, indigestible dextrin or polydextrose is preferred.

In the case where the processed food according to an embodiment of the present invention is a beverage, it may be a beverage with a limited content of a high-intensity sweetener.

The content of the high-intensity sweetener contained in the beverage with a limited content of the high-intensity sweetener may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of the high-intensity sweetener contained in the beverage with a limited content of the high-intensity sweetener may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

Specific examples of the high-intensity sweetener are as described above.

In the case where the processed food according to an embodiment of the present invention is a beverage, it may be a beverage with a limited content of rebaudioside A.

A content of rebaudioside A contained in the beverage with a limited content of rebaudioside A may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of rebaudioside A contained in the beverage with a limited content of rebaudioside A may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass ppt based on the total amount (100 mass%) of the beverage.

In the case where the processed food according to an embodiment of the present invention is a beverage, it may be a beverage with a limited content of erythritol.

The content of erythritol contained in the beverage with a limited content of erythritol may be less than 10.0 parts by mass, less than 5.0 parts by mass, less than 2.0 parts by mass, less than 1.0 parts by mass, less than 0.1 parts by mass, less than 0.05 parts by mass, less than 0.01 parts by mass, less than 0.001 parts by mass, or less than 0.0001 parts by mass relative to 100 parts by mass of the total amount of uric acid contained in the beverage.

In addition, the content of erythritol contained in the beverage with a limited content of erythritol may be less than 1000 mass ppm, less than 100 mass ppm, less than 10 mass ppm, less than 1 mass ppm, less than 100 mass ppb, less than 10 mass ppb, less than 1 mass ppb, less than 100 mass ppt, less than 10 mass ppt, or less than 1 mass

ppt based on the total amount (100 mass%) of the beverage.

3.1.5 Bittering agent and bitterness-imparting agent

In the case where the processed food according to an embodiment of the present invention is a beverage, it may be a beverage further blended with one or more selected from a bittering agent and a bitterness-imparting agent.
In particular, in the case where the processed food according to an embodiment of the present invention is a beer-taste beverage, bitterness may be imparted by hops, or a bittering agent or bitterness-imparting agent shown below may be used together with hops. In addition, a bittering agent or bitterness-imparting agent described below may be used instead of hops without using hops.
The bittering agent or bitterness-imparting agent is not particularly limited, and a substance used as a bitterness-imparting agent in ordinary beer and low-malt beer can be used. Examples include rosemary, litchi, caraway, juniper berry, sage, reishi mushroom, bay laurel, quassin, caffeine, absinthin, naringin, citrus extract, bitter wood extract, coffee extract, tea extract, bitter gourd extract, lotus embryo extract, *Aloe arborescens* extract, rosemary extract, litchi extract, laurel extract, sage extract, and caraway extract.
One of these bittering agents and bitterness-imparting agents may be used alone, or two or more of these may be used in combination.

3.1.6 Antioxidant

In the case where the processed food according to an embodiment of the present invention is a beverage, it may be a beverage further blended with an antioxidant.
The antioxidant is not particularly limited, and a substance used as an antioxidant in ordinary beer and low-malt beer can be used, and examples include ascorbic acid, erythorbic acid, and catechin.
One of these antioxidants may be used alone, or two or more of these antioxidants may be used in combination.

3.1.7 Flavoring

In the case where the processed food according to an embodiment of the present invention is a beverage, it may be a beverage further blended with a flavoring.
The flavoring is not particularly limited and can be appropriately selected according to each beverage.
For example, in the case where the processed food according to an embodiment of the present invention is a beer-taste beverage, examples of the beer flavoring include esters and higher alcohols, and specific examples include n-propanol and isobutanol. One of these flavorings may be used alone, or two or more of these flavorings may be used in combination.

3.1.8 Acidulant

In the case where the processed food according to an embodiment of the present invention is a beverage, it may be a beverage further blended with an acidulant.
The acidulant is not particularly limited as long as it is a substance with a sour taste, and examples include tartaric acid, phosphoric acid, citric acid, gluconic acid, lactic acid, malic acid, phytic acid, acetic acid, succinic acid, glucono-delta-lactone, and salts thereof.
Among these, the acidulant is preferably at least one selected from tartaric acid, phosphoric acid, citric acid, gluconic acid, lactic acid, malic acid, phytic acid, acetic acid, succinic acid, and salts thereof, more preferably at least one selected from tartaric acid, phosphoric acid, citric acid, lactic acid, tartaric acid, acetic acid, and salts thereof, and even more preferably at least one selected from tartaric acid, phosphoric acid, and lactic acid.
One of these acidulants may be used alone, or two or more of these acidulants may be used in combination.

3.1.9 Salt

In the case where the processed food according to an embodiment of the present invention is a beverage, it may be a beverage further blended with a salt.
Examples of the salt include sodium chloride, acid potassium phosphate, acid calcium phosphate, ammonium phosphate, magnesium sulfate, calcium sulfate, potassium metabisulfite, calcium chloride, magnesium chloride, potassium nitrate, and ammonium sulfate.
One of these salts may be used alone, or two or more of these salts may be used in combination.

3.2 Carbonic acid gas

In the case where the processed food according to an embodiment of the present invention is a carbonated beverage, it contains carbonic acid gas.
The amount of carbonic acid gas in the carbonated beverage may be adjusted using carbonation equipment or may be adjusted by adding carbonated water. In the case where the processed food according to an embodiment of the present invention is a beer-taste beverage, carbonic acid gas produced in the fermentation step of the beer-taste beverage can be used as it is as carbonic acid gas contained in the beer-taste beverage.
The carbonic acid gas concentration in the case where the processed food according to an embodiment of the present invention is a carbonated beverage is preferably 0.30 (w/w)% or more, more preferably 0.35 (w/w)% or more, even more preferably 0.40 (w/w)% or more, still more preferably 0.42 (w/w)% or more, and particularly preferably 0.45 (w/w)% or more, and preferably 0.80 (w/w)% or less, more preferably 0.70 (w/w)% or less, even more preferably 0.60 (w/w)% or less, still more preferably 0.57 (w/w)% or less, and particularly preferably 0.55 (w/w)% or less.
In the present specification, the carbonic acid gas concentration can be measured by immersing a container containing a target carbonated beverage in a water bath at 20°C for 30 minutes or more with occasional shaking of the container to adjust the beverage to 20°C and then using a gas volume measuring device (e.g., such as GVA-500 (available from Kyoto Electronics Manufacturing Co., Ltd.)).
In the case where the processed food according to an embodiment of the present invention is a packaged beverage, the carbonic acid gas pressure of the packaged beverage is appropriately adjusted such that the carbonic acid gas concentration is in the range described above and may be 5.0 $kg/cm^2$ or less, 4.5 $kg/cm^2$ or less, or 4.0 $kg/cm^2$ or less, and 0.20 $kg/cm^2$ or more, 0.50 $kg/cm^2$ or more, or 1.0 $kg/cm^2$ or more. Any of these upper and lower limits may be combined; for example, the carbonic acid gas pressure of the beverage may be 0.20 $kg/cm^2$ or more and 5.0 $kg/cm^2$ or less, 0.50 $kg/cm^2$ or more and 4.5 $kg/cm^2$ or less, or 1.0 $kg/cm^2$ or more and 4.0 $kg/cm^2$ or less.
In the present specification, the gas pressure refers to the gas pressure in the container except in special cases.
The pressure can be measured by a method well-known to those skilled in the art, for example, using a method in which a sample adjusted to 20°C is fixed to a gas internal pressure meter, the stopcock of the gas internal pressure meter is opened once to release the gas, the stopcock is closed again, the gas internal pressure meter is shaken, and a value when the pointer reaches a certain position is read; or using a commercially available gas pressure measuring device.

3.3 Additional additive

To the processed food according to an embodiment of the present invention, an additive of various types may be added as necessary to the extent that the effects of the present invention are not hindered.
Examples of such an additive include colorants; foam-forming agents; fermentation promoters; yeast extract; protein-based substances, such as peptide-containing substances; and seasonings, such as amino acids.
The colorant is used to impart a desired color to the processed food, and a caramel dye, a cacao dye, a safflower dye, a colored sugar solution, and/or the like can be used.
The foam-forming agent is used to form beer-like foam or to keep the foam of the beverage in the case where the processed food according to an embodiment of the present invention is a beer-taste beverage. A plant-extracted saponin-based substance, such as soybean saponin and/or quillaja saponin; a plant protein, such as corn and/or soybean; and a peptide-containing substance, such as a collagen peptide; a yeast extract; and/or the like can be appropriately used.
The fermentation promoter is used to promote fermentation by yeast in the case where the processed food according to an embodiment of the present invention is a fermented beer-taste beverage. For example, a yeast extract; a bran component, such as rice or wheat bran; a vitamin; a mineral agent; and/or the like can be used alone or in combination.

3.4 Packaged processed food

The processed food according to an embodiment of the present invention may be a packaged processed food packaged in a container. For the packaged processed food, a container of any form and material may be used; examples of the container include a bottle, a can, a bottle can, a barrel, a PET bottle, a paper pack, a pouch, a bag-in-box, a paper bag, a resin bag, a portion pack, and a chilled cup, and the container is appropriately selected according to the type of processed food.

4. Method of stabilizing characteristic of processed food

The present invention also provides a method of stabilizing a characteristic of a processed food, in which the

content (X) of uric acid of the processed food is adjusted to 0.001 μg/g or more.

As described above, the processed food containing uric acid can be a processed food with improved stability of a characteristic peculiar to each processed food. Thus, a characteristic possessed by the processed food can be stabilized by adjusting the content (X) of uric acid in the processed food to 0.001 μg/g or more.

In the stabilization method according to an embodiment of the present invention, the content (X) of uric acid in the processed food may be adjusted by using a raw material containing uric acid or adding uric acid in the production process of the processed food, or may be adjusted by adding uric acid after production of the processed food. In addition, in the case of using a raw material containing purines as a raw material for the processed food, the content (X) of uric acid may be adjusted by adding a raw material having xanthine oxidase activity in the production process or after production of the processed food. Furthermore, to adjust the content (X) of uric acid changed from xanthine by adding a raw material having xanthine oxidase activity, a raw material having uricase activity may be further added.

The content (X) of uric acid to be adjusted to stabilize the processed food is as described above. In addition, in the stabilization method according to an embodiment of the present invention, the processed food to be stabilized is as described above, and the requirements for various components contained in the processed food and physical properties are also as described above.

5. Method of producing processed food

The method of producing a processed food according to an embodiment of the present invention includes adjusting the content (X) of uric acid in anywhere in the production process of each processed food.

Adjusting the content (X) of uric acid may be: a step of adding uric acid and/or a raw material containing uric acid; or a step of performing dilution with water or the like. However, in the case of using a raw material containing purines as a raw material for the processed food, the step of adjusting the content (X) of uric acid is preferably step (a) of adding a raw material having xanthine oxidase activity.

In step (a), the raw material having xanthine oxidase activity is as described above, but a commercially available preparation of xanthine oxidase may be used as the raw material.

In step (a), the timing of adding the raw material having xanthine oxidase activity is any timing in the production process of each processed food. The raw material may be added at once or may be added in multiple times.

In the production method, step (a1) of adding a raw material having uricase activity may be performed simultaneously with step (a) and/or after step (a).

In step (a1), the raw material having uricase activity is described above, but a commercially available preparation of uricase may be used as the raw material.

In step (a1), the timing of adding the raw material having uricase activity is any timing in the production process of each processed food. The raw material may be added at once or may be added in multiple times.

In step (a) and step (a1), a heat treatment may be carried out after addition of the raw material having xanthine oxidase activity.

In the heat treatment, the heating temperature may be 20°C or higher, 25°C or higher, 30°C or higher, 35°C or higher, 40°C or higher, or 45°C or higher, and may be 140°C or lower, 135°C or lower, 130°C or lower, 125°C or lower, 120°C or lower, 115°C or lower, 110°C or lower, 105°C or lower, 100°C or lower, 95°C or lower, 90°C or lower, 85°C or lower, or 80°C or lower.

In addition, the heating time may be 1 minute or more, 10 minutes or more, 20 minutes or more, 30 minutes or more, 40 minutes or more, 50 minutes or more, or 60 minutes or more, and may be 10 hours or less, 9 hours or less, 8 hours or less, 7 hours or less, or 6 hours or less.

The pH of the raw material after adding the additive for processed food in step (a) and step (a1) may be 2.0 or higher, 2.2 or higher, 2.4 or higher, 2.6 or higher, 2.8 or higher, 3.0 or higher, 3.1 or higher, 3.2 or higher, 3.3 or higher, 3.4 or higher, 3.5 or higher, 3.6 or higher, 3.7 or higher, 3.8 or higher, 3.9 or higher, 4.0 or higher, 4.1 or higher, 4.2 or higher, 4.3 or higher, 4.4 or higher, 4.5 or higher, 4.6 or higher, 4.7 or higher, 4.8 or higher, 4.9 or higher, or 5.0 or higher, and may be 7.0 or lower, 6.9 or lower, 6.8 or lower, 6.7 or lower, 6.6 or lower, 6.5 or lower, 6.4 or lower, 6.3 or lower, 6.2 or lower, 6.1 or lower, 6.0 or lower, 5.9 or lower, 5.8 or lower, 5.7 or lower, 5.6 or lower, 5.5 or lower, 5.4 or lower, 5.3 or lower, 5.2 or lower, 5.1 or lower, 5.0 or lower, 4.9 or lower, 4.8 or lower, 4.7 or lower, 4.6 or lower, 4.5 or lower, 4.4 or lower, 4.3 or lower, 4.2 or lower, 4.1 or lower, or 4.0 or lower.

The processed food according to an embodiment of the present invention thus obtained is filled in a predetermined container and distributed to the market as a product.

The method of packaging the processed food is not particularly limited, and a packaging method known to those skilled in the art can be used. Through the packaging, the processed food according to an embodiment of the present invention is filled and sealed in a container. In the packaging, a container of any form and material may be used, and examples of the container include containers described in "3.4 Packaged processed food".

Hereinafter, the method of producing a processed food according to an embodiment of the present invention

will be described in detail by taking a method of producing a fermented beer-taste beverage and a method of producing a non-fermented beer-taste beverage as examples.

5.1 Method of producing fermented beer-taste beverage

Examples of the method of producing a fermented beer-taste beverage, a processed food according to an embodiment of the present invention, include a method including steps (1) to (3) below, where step (a) above is performed at least before step (1), simultaneously with any one or more steps of steps (1) to (3), between two steps selected from steps (1) to (3), or after step (3):

(1) performing at least one treatment of saccharification treatment, boiling treatment, or solid content removal treatment on a raw material to produce a pre-fermentation liquid;
(2) cooling the pre-fermentation liquid obtained in step (1) to obtain a cooled pre-fermentation liquid; and
(3) adding yeast to the cooled pre-fermentation liquid obtained in step (2) to perform alcoholic fermentation; and wherein

step (a) is performed at least before step (1), simultaneously with one or more steps of steps (1) to (3), between two steps selected from steps (1) to (3), or after step (3).
In the method of producing a fermented beer-taste beverage, step (a) above can be performed at one or more timings of (i) to (v) below:

· (i): before step (1);
· (ii): simultaneously with at least one of step (1), step (2), or step (3);
· (iii): between step (1) and step (2);
· (iv): between step (2) and step (3); and
· (v): after step (3).

In addition, the method of producing a fermented beer-taste beverage may further include step (b) below from the viewpoint of making a beverage with a further lowered content of purines:
(b): performing treatment of removing purines.
Furthermore, the method of producing a fermented beer-taste beverage may include: inactivating the xanthine oxidase activity, for example, performing heating and/or pH adjustment. The present invention also includes a fermented beer-taste beverage in which xanthine oxidase activity is inactivated by heating, pH adjustment, and/or the like, as long as the fermented beer-taste beverage has undergone step (a) of adding a raw material having xanthine oxidase activity.
In the case of producing a beverage with a bitterness value of 5 BUs or more as a raw material in the method of producing a fermented beer-taste beverage, the method preferably includes adding hops. In addition, in the case of producing a beverage with a bitterness value of less than 5 BUs as a raw material, the method preferably does not include adding hops.

Step (1)

Step (1) is a step of performing at least one treatment among saccharification treatment, boiling treatment, or solid content removal treatment using various raw materials to obtain a pre-fermentation liquid.
For example, in the case of using malt as a raw material, various raw materials including water and malt are fed in a preparation kettle or a preparation tank, and an enzymatic agent that promotes a change of a component derived from the raw material may be added as necessary before fermentation.
Examples of the enzymatic agent include amylase, protease, purine nucleosidase, adenine deaminase, guanine deaminase, deaminase, polyphenol oxidase, glucanase, xylanase, pectinase, cellulase, lipase, and glucosidase. In addition, examples include enzymatic agents falling under "(3) Following Enzymatic Agents Added During Brewing Step for Purpose of Rationalization of Brewing and the Like" in Article 3 "7. Articles Not Handled as Raw Materials for Alcoholic Beverages" of the Notice on the Liquor Tax Law and the Administrative Ordinance Related to Alcoholic Beverages (revised on June 27, 2018).
Adding these enzymatic agents can efficiently adjust the component composition of the resulting fermented beer-taste beverage. As various raw materials besides malt, hops, a preservative, a sweetener, a water-soluble dietary fiber, a bittering agent or bitterness-imparting agent, an antioxidant, a flavoring, an acidulant, a salt, and/or the like may be added. These raw materials may be added before performing the saccharification treatment, during the saccharification treatment, or after completion of the saccharification treatment. In addition, these raw materials may be added after the alcoholic fermentation in the next step.

A mixture of the various raw materials is heated to saccharify the starch of the raw materials to perform saccharification treatment.

The temperature and time of the saccharification treatment are preferably appropriately adjusted in view of the type of malt used, the malt ratio, raw materials besides water and malt, the type and amount of the enzyme used, the original wort extract concentration of the beverage finally obtained, and the like. For example, in an embodiment of the present invention, the temperature of the saccharification treatment is preferably from 35 to 80°C, and the time of the saccharification treatment is preferably from 10 to 360 minutes. After the saccharification treatment, filtration is performed, and a saccharified liquid is obtained.

The saccharified liquid is preferably subjected to boiling treatment.

When this boiling treatment is performed, hops, a bittering agent, and the like are preferably added in the case of using them as raw materials. Hops, a bittering agent, and/or the like may be added between the start of boiling the saccharified liquid and before the completion of the boiling.

Instead of the saccharified liquid, a pre-fermentation liquid may be prepared by adding hops, a bittering agent, and/or the like to a mixture obtained by adding warm water to a malt extract, and boiling the mixture.

In addition, in the case without using malt, a pre-fermentation liquid may be prepared by mixing, as the raw materials, a liquid sugar containing a carbon source; a nitrogen source as an amino acid-containing raw material other than barley and the like or malt; hops; a preservative; a sweetener; a water-soluble dietary fiber; a bittering agent or a bitterness-imparting agent; an antioxidant; a flavoring; an acidulant; a salt; and/or the like together with warm water to prepare a liquid sugar solution, and boiling the liquid sugar solution.

In the case of using hops, it may be added before the boiling treatment or may be added between the start of boiling the liquid sugar solution and before the completion of the boiling.

Step (2)

Step (2) is a step of cooling the pre-fermentation liquid produced in step (1) to obtain a cooled pre-fermentation liquid.

After the completion of the boiling treatment, the pre-fermentation liquid is transferred to a whirlpool and cooled to 0 to 20°C. After the cooling, solid contents, such as coagulated protein, may be removed to adjust the original wort extract concentration.

Through such treatment, a cooled pre-fermentation liquid is obtained.

Step (3)

Step (3) is a step of adding yeast to the cooled pre-fermentation liquid produced in step (2) to perform alcoholic fermentation.

The yeast used in this step can be appropriately selected in view of the type of the fermented beverage produced, the target flavor, the fermentation conditions, and the like, and top-fermenting yeast may be used, or bottom-fermenting yeast may be used. In addition, wine yeast, yeast for brewing Japanese sake (sake yeast), wild yeast capable of producing alcohol, or the like may be used.

The yeast in the form of a yeast suspension as is may be added to raw materials, or a slurry produced by concentrating the yeast by centrifugation or sedimentation may be added to the pre-fermentation liquid. Alternatively, a material obtained by completely removing the supernatant after the centrifugation may be added. The amount of yeast added to a stock solution can be appropriately set and is, for example, appropriately from $5 \times 10^6$ cells/mL to $1 \times 10^8$ cells/mL.

Various conditions, such as the fermentation temperature and the fermentation period, for performing alcoholic fermentation can be appropriately set, and fermentation may be performed, for example, under conditions of 8 to 25°C for 5 to 10 days. During the fermentation step, the temperature (temperature increase or temperature decrease) or pressure of the fermented liquid may be changed.

In addition, after completion of this step, the yeast may be removed with a filter or the like, and water or an additive, such as a flavoring, an acidulant, or a dye, may be added as necessary.

Step (b)

The method of producing a fermented beer-taste beverage may include: performing treatment of removing purines as step (b) from the viewpoint of making a beverage with a further lowered content of purines.

Examples of the treatment of removing purines include an adsorption treatment of adsorbing and removing purines using activated carbon and/or zeolite. Specifically, a known method can be employed as the method of the adsorption treatment.

In addition, one or more enzymatic treatments selected from the group consisting of a purine nucleosidase treatment; an adenine deaminase treatment; and a guanine deaminase treatment; may be performed before performing the adsorption treatment.

In the purine nucleosidase treatment, purine nucleosidase is acted on a fermentation raw material liquid before fermentation or a fermented liquid after fermentation in advance, and thus adenosine and guanosine in the solution can be converted into free purine groups and at least some of the free purine groups can be converted into xanthine, which is a yeast-non-assimilable free purine group. After performing this treatment, the adsorption treatment is performed, and this can preferentially adsorb and remove xanthine among purines and can lower the content of purines in a malt fermented beverage to be finally obtained.

Furthermore, adenine can be converted into hypoxanthine by performing the adenine deaminase treatment and then performing the xanthine oxidase treatment, which enables efficient degradation by xanthine oxidase.

Likewise, guanine can be converted into xanthine by performing the guanine deaminase treatment and then performing the xanthine oxidase treatment, which enables efficient degradation by xanthine oxidase.

Moreover, these enzymatic treatments may be performed at any timing before the adsorption treatment; for example, simultaneously with step (1) or after completion of step (1), or simultaneously with step (3) or after completion of step (3).

After these steps, a step performed in the production of a beer-taste beverage known to those skilled in the art, such as a step of storing an alcoholic beverage and a filtration step, may be performed.

The fermented beer-taste beverage thus produced is filled in a predetermined container and distributed to the market as a product.

The method of packaging the fermented beer-taste beverage is not particularly limited, and a packaging method known to those skilled in the art can be used. Through the packaging, the fermented beer-taste beverage is filled and sealed in a container. In the packaging, a container of any form and material may be used, and examples of the container are as described above.

5.2 Method of producing non-fermented beer-taste beverage

Examples of the method of producing a non-fermented beer-taste beverage which is a processed food according to an embodiment of the present invention, include a method including: (1), (2), and (4) below, where at least step (a) above is performed before step (1), simultaneously with any one or more steps of step (1), step (2), and step (4), between two steps selected from step (1), step (2), and step (4), or after step (4):

(1) performing at least one treatment of saccharification treatment, boiling treatment, or solid content removal treatment on a raw material to obtain a pre-beverage liquid;
(2): cooling the pre-beverage liquid obtained in step (1) to obtain a cooled pre-beverage liquid; and
(4) adding carbonic acid gas to the cooled pre-beverage liquid produced in step (2).

Steps (1) and (2) are the same as the methods of preparing the "pre-fermentation liquid" and the "cooled pre-fermentation liquid" in the "method of producing a fermented beer-taste beverage" described above.

In the case of producing a non-fermented non-alcoholic beer-taste beverage, step (4) may be performed as it is.

In the case of producing a non-fermented alcohol-containing beer-taste beverage, the pre-beverage liquid produced in step (1) and/or the cooled pre-beverage liquid produced in step (2) may be further blended with a distilled liquor, such as spirits, whiskey, or shochu, to prepare an alcohol-containing beverage.

In addition, for a method of adding carbonic acid gas in step (4), carbonic acid gas may be added by mixing the cooled pre-beverage liquid produced in step (2) and carbonated water, or carbonic acid gas may be directly added to a cooled beverage stock solution.

When carbonic acid gas is added, an additive, such as a preservative, a sweetener, a flavoring, an acidulant, and/or a dye may be added as necessary.

In the method of producing a non-fermented beer-taste beverage, step (a) above can be performed at one or more timings of (i) to (v) below:

- (i): before step (1);
- (ii): simultaneously with at least one of step (1), step (2), or step (4);
- (iii): between step (1) and step (2);
- (iv): between step (2) and step (4); and
- (v): after step (4).

In the case of producing a non-fermented alcohol-containing beer-taste beverage, step (a) may be performed

simultaneously with blending with a distilled liquor, such as spirits, whiskey, or shochu.

In addition, the method of producing a non-fermented beer-taste beverage may further include step (b) below from the viewpoint of making a beverage with a further lowered content of purines:

(b): performing treatment of removing purines.

Step (b) is the same as in the "method of producing a fermented beer-taste beverage" described above.

In addition, in the case of performing one or more enzymatic treatments selected from the purine nucleosidase treatment, the adenine deaminase treatment, and the guanine deaminase treatment in step (b), the one or more enzymatic treatments may be performed at any timing before the adsorption treatment; for example, simultaneously with step (1) or after completion of step (1), or simultaneously with step (4) or after completion of step (4).

In the case of producing a beverage with a bitterness value of 5 BUs or more as a raw material in the method of producing a non-fermented beer-taste beverage, the method preferably includes a step of adding hops. In addition, in the case of producing a beverage with a bitterness value of less than 5 BUs as a raw material, the method preferably does not include adding hops. The step of adding hops is preferably performed simultaneously with step (1).

The non-fermented beer-taste beverage thus produced is filled in a predetermined container and distributed to the market as a product.

The method of packaging the non-fermented beer-taste beverage is not particularly limited, and a packaging method known to those skilled in the art can be used. Through the packaging, the non-fermented beer-taste beverage is filled and sealed in a container. In the packaging, a container of any form and material may be used, and examples of the container are as described above.

## Examples

Hereinafter, the present invention will be described in more detail by examples, but the present invention is not limited by these examples. The content of uric acid, the content of purines, the content of xanthine, and the xanthine oxidase activity value of purine-lowering agent for food are values measured in accordance with the methods described above.

In addition, in Examples 1 to 12 and Comparative Examples 1 to 5, a deterioration preventing effect was evaluated based on the following method.

### Evaluation method of deterioration preventing effect

Each sample beverage after being allowed to stand undisturbed was evaluated by five panelists who were trained on a regular basis. The score for the degree of deterioration of the flavor of a reference sample beverage was set to "0.0", and a sample beverage with deterioration of the flavor determined to be prevented compared with the reference beverage was positively rated up to +3.0 by +0.1 according to the degree of the prevention of the deterioration. On the other hand, a sample beverage with deterioration of the flavor determined to be the same degree or progressed compared with the reference beverage was rated "0.0". Then, the average score of the scores of the five panelists was described in each table as the evaluation of the deterioration preventing effect of the beverage. In the evaluation, the criteria were standardized among the panelists.

### Examples 1 to 4 and Comparative Example 1

In Examples 1 to 4, a sample beverage was prepared by adding uric acid to a commercially available beer (a content (X) of uric acid of 0.00 μg/g and a content (Y) of purines of 120 μg/g) to have the content (X) of uric acid shown in Table 1. In addition, in Comparative Example 1, a commercially available beer before adding uric acid was used as a sample beverage.

The same amount each of these sample beverages was placed in the same type of bottle container and allowed to stand undisturbed in a sealed state in a dark room environment at 50°C for 3 days. The sample beverages after being allowed to stand undisturbed were evaluated for the deterioration preventing effect of the sample beverages of Examples 1 to 4 based on the above method using the sample beverage of Comparative Example 1 after being allowed to stand undisturbed as a reference with the results shown in Table 1. For the same beverage, no difference in a score of 1.0 or more was found between the panelists. In addition, no deterioration was observed in Comparative Example 1 before being allowed to stand undisturbed for 3 days and Examples 1 to 4, confirming that the beverages had the same quality as each other.

[Table 1]

Table 1 (Beer)

| | | Comparative Example 1 | Example 1 | Example 2 | Example 3 | Example 4 |
|---|---|---|---|---|---|---|
| Content (X) of uric acid | μg/g | 0.000 | 0.010 | 5.0 | 1000 | 1500 |
| Content (Y) of purines | μg/g | 120 | 120 | 120 | 120 | 120 |
| (X)/(Y) | - | 0 | 0.000083 | 0.042 | 8.3 | 12.5 |
| Evaluation of deterioration preventing effect | | - | 0.6 | 1.0 | 2.0 | 2.7 |

Table 1 shows that the beer prepared to contain uric acid exhibited the effect of preventing the deterioration of the flavor and improved the flavor stability of the beer.

Examples 5 and 6, and Comparative Example 2

In Examples 5 and 6, a sample beverage was prepared by adding uric acid to a commercially available purine-free beer (a content (X) of uric acid of 0.00 μg/g and a content (Y) of purines of 4.0 μg/g) to have the content (X) of uric acid shown in Table 2. In addition, in Comparative Example 2, a commercially available purine-free beer before adding uric acid was used as a sample beverage.

For each of these sample beverages, the same amount of the beverage was placed in the same type of bottle container and allowed to stand undisturbed in a sealed state in a dark room environment at 50°C for 3 days. The sample beverages after being allowed to stand undisturbed were evaluated for the deterioration preventing effect of the sample beverages of Examples 5 and 6 based on the above method using the sample beverage of Comparative Example 2 after being allowed to stand undisturbed as a reference with the results shown in Table 2. For the same beverage, no difference in a score of 1.0 or more was found between the panelists. In addition, no deterioration was observed in Comparative Example 2 before being allowed to stand undisturbed for 3 days and Examples 5 and 6, confirming that the beverages had the same quality as each other.

[Table 2]

Table 2 (Purine-free beer)

| | | Comparative Example 2 | Example 5 | Example 6 |
|---|---|---|---|---|
| Content (X) of uric acid | μg/g | 0.000 | 5.0 | 1000 |
| Content (Y) of purines | μg/g | 4.0 | 4.0 | 4.0 |
| (X)/(Y) | - | 0 | 1.3 | 250 |
| Evaluation of deterioration preventing effect | | - | 1.4 | 2.5 |

Table 2 shows that the purine-free beer prepared to contain uric acid also exhibited the effect of preventing the deterioration of the flavor and improved the flavor stability.

Examples 7 to 9 and Comparative Example 3

In Examples 7 to 9, a sample beverage was prepared by adding uric acid to a commercially available soy milk beverage (a content (X) of uric acid of 0.00 μg/g and a content (Y) of purines of 300 μg/g) to have the content (X) of uric acid shown in Table 3. In addition, in Comparative Example 3, a commercially available soy milk beverage before adding uric acid was used as a sample beverage.

For each of these sample beverages, the same amount of the beverage was placed in the same type of bottle container and allowed to stand in a sealed state in a dark room environment at 50°C for 3 days. The sample beverages after being allowed to stand undisturbed were evaluated for the deterioration preventing effect of the sample beverages of Examples 7 to 9 based on the above method using the sample beverage of Comparative Example 3 after being

allowed to stand undisturbed as a reference with the results shown in Table 3. For the same beverage, no difference in a score of 1.0 or more was found between the panelists. In addition, no deterioration was observed in Comparative Example 3 before being allowed to stand undisturbed for 3 days and Examples 7 to 9, confirming that the beverages had the same quality as each other.

[Table 3]

Table 3 (Soy milk beverage)

| | | Comparative Example 3 | Example 7 | Example 8 | Example 9 |
|---|---|---|---|---|---|
| Content (X) of uric acid | μg/g | 0.000 | 0.010 | 5.0 | 1000 |
| Content (Y) of purines | μg/g | 300 | 300 | 300 | 300 |
| (X)/(Y) | - | 0 | 0.000033 | 0.017 | 3.3 |
| Evaluation of deterioration preventing effect | - | 0.6 | 1.3 | 2.6 | |

Table 3 shows that the soy milk beverage prepared to contain uric acid also exhibited the effect of preventing the deterioration of the flavor and improved the flavor stability.

Examples 10 and 11, and Comparative Example 4

In Examples 10 and 11, a sample beverage was prepared by adding uric acid to a commercially available non-alcoholic beer-taste beverage (1) (a content (X) of uric acid of 0.00 μg/g, a content (Y) of purines of 1.0 μg/g, and an alcoholic strength of 0.0 (v/v)%) to have the content (X) of uric acid shown in Table 4. In addition, in Comparative Example 4, a commercially available non-alcoholic beer-taste beverage (1) before adding uric acid was used as a sample beverage.

For each of these sample beverages, the same amount of the beverage was placed in the same type of bottle container and allowed to stand undisturbed in a sealed state in a dark room environment at 50°C for 3 days. The sample beverages after being allowed to stand undisturbed were evaluated for the deterioration preventing effect of the sample beverages of Examples 10 and 11 based on the above method using the sample beverage of Comparative Example 4 after being allowed to stand undisturbed as a reference with the results shown in Table 4. For the same beverage, no difference in a score of 1.0 or more was found between the panelists. In addition, no deterioration was observed in Comparative Example 4 before being allowed to stand undisturbed for 3 days and Examples 10 and 11, confirming that the beverages had the same quality as each other.

Example 12 and Comparative Examples 5

In Example 12, a sample beverage was prepared by adding uric acid to a commercially available non-alcoholic beer-taste beverage (2) (a content (X) of uric acid of 0.00 μg/g, a content (Y) of purines of 120 μg/g, and an alcoholic strength of 0.0 (v/v)%) to have the content (X) of uric acid shown in Table 4. In addition, in Comparative Example 5, a commercially available non-alcoholic beer-taste beverage (2) before adding uric acid was used as a sample beverage.

For each of these sample beverages, the same amount of the beverage was placed in the same type of bottle container and allowed to stand undisturbed in a sealed state in a dark room environment at 50°C for 3 days. The sample beverages after being allowed to stand undisturbed were evaluated for the deterioration preventing effect of the sample beverage of Example 12 based on the above method using the sample beverage of Comparative Example 5 after being allowed to stand undisturbed as a reference with the results shown in Table 4. For the same beverage, no difference in a score of 1.0 or more was found between the panelists. In addition, no deterioration was observed in Comparative Example 5 before being allowed to stand undisturbed for 3 days and Example 12, confirming that the beverages had the same quality as each other.

[Table 4]

Table 4 (Non-alcoholic beer-taste beverage)

<table>
<tr><td colspan="2"></td><td>Comparative Example 4</td><td>Example 10</td><td>Example 11</td><td>Comparative Example 5</td><td>Example 12</td></tr>
<tr><td>Content (X) of uric acid</td><td>μg/g</td><td>0.000</td><td>0.010</td><td>5.0</td><td>0.000</td><td>5.0</td></tr>
<tr><td>Content (Y) of purines</td><td>μg/g</td><td>1.0</td><td>1.0</td><td>1.0</td><td>120</td><td>120</td></tr>
<tr><td>(X)/(Y)</td><td>-</td><td>0</td><td>0.010</td><td>5.0</td><td>0</td><td>0.042</td></tr>
<tr><td colspan="2">Evaluation of deterioration preventing effect</td><td>-</td><td>1.2</td><td>1.8</td><td>-</td><td>2.1</td></tr>
</table>

Table 4 shows that the non-alcoholic beer-taste beverage prepared to contain uric acid also exhibited the effect of preventing the deterioration of the flavor and improved the flavor stability.

Examples 13 to 15 and Comparative Example 6

Each sample of Examples 13 to 15 was prepared by weighing 10 g of a commercially available beer with a xanthine content and a uric acid content shown in Table 5, adding a purine-lowering agent for food, the purine-lowering agent having xanthine oxidase activity, in an amount corresponding to a xanthine oxidase activity value shown in Table 5, sufficiently stirring the mixture, and allowing the mixture to stand undisturbed at 65°C for 120 minutes.

In addition, a sample of Comparative Example 6 was prepared by allowing the above commercially available beer to stand undisturbed at 65°C for 120 minutes without adding the purine-lowering agent for food.

The xanthine content and uric acid content of these samples were measured with the results shown in Table 5. The xanthine content, the uric acid content, and the xanthine oxidase activity value of the purine-lowering agent for food are values measured in accordance with the methods described above.

[Table 5]

Table 5

<table>
<tr><td colspan="3"></td><td>Comparative Example 6</td><td>Example 13</td><td>Example 14</td><td>Example 15</td></tr>
<tr><td colspan="2">Type of processed food</td><td>-</td><td>Beer</td><td>Beer</td><td>Beer</td><td>Beer</td></tr>
<tr><td rowspan="2">Before preparation</td><td>Xanthine content</td><td>μg/g</td><td>14.4</td><td>14.4</td><td>14.4</td><td>14.4</td></tr>
<tr><td>Uric acid content</td><td>μg/g</td><td>0.0</td><td>0.0</td><td>0.0</td><td>0.0</td></tr>
<tr><td colspan="2">Xanthine oxidase activity value of added purine-lowering agent</td><td>U/10 g</td><td>0</td><td>1</td><td>10</td><td>100</td></tr>
<tr><td rowspan="3">After preparation</td><td>Xanthine content</td><td>μg/g</td><td>14.4</td><td>14.3</td><td>13.1</td><td>0.4</td></tr>
<tr><td>Reduction percentage of xanthine</td><td>%</td><td>0</td><td>0.52</td><td>8.87</td><td>96.88</td></tr>
<tr><td>Uric acid content</td><td>μg/g</td><td>0</td><td>0.2</td><td>1.8</td><td>18.3</td></tr>
</table>

Table 5 shows that xanthine content was lowered, and uric acid was produced in the samples prepared by adding the purine-lowering agent for food, the purine-lowering agent having a xanthine oxidase activity value, in Examples 13 to 15. In addition, from the results of Examples 1 to 4 shown in Table 1, it can be said that the produced uric acid can contribute to improving the flavor stability of beer.

## Claims

1. A processed food comprising uric acid, wherein a content (X) of uric acid is 0.001 μg/g or more.

2. The processed food according to claim 1, wherein a content (Y) of purines is 1000 μg/g or less.

3. The processed food according to claim 1 or 2, wherein a ratio [(X)/(Y)] is 0.00001 or more, where X (unit: μg/g) is the content of uric acid and Y (unit: μg/g) is the content of purines.

4. The processed food according to any one of claims 1 to 3, wherein the processed food is a processed food belonging to middle classifications 72 to 76 in Japan Standard Commodity Classification revised in June 1990, with the exception of ice and manufactured tobacco belonging to middle classification 76.

5. The processed food according to any one of claims 1 to 4, wherein the processed food is a beer-taste beverage.

6. The processed food according to any one of claims 1 to 5, comprising xanthine oxidase activity.

7. The processed food according to any one of claims 1 to 5, comprising a protein having comprised xanthine oxidase activity.

8. A method of producing the processed food described in any one of claims 1 to 7, the method comprising: adjusting the content (X) of uric acid.

9. A method of stabilizing a characteristic possessed by a processed food, wherein the processed food with a content (X) of uric acid adjusted to 0.001 μg/g or more is prepared.

## INTERNATIONAL SEARCH REPORT

International application No. **PCT/JP2022/026325**

**A. CLASSIFICATION OF SUBJECT MATTER**

***A23L 5/00***(2016.01)i; ***A23L 2/52***(2006.01)i; ***A23L 11/65***(2021.01)i; ***C12C 5/02***(2006.01)i; ***C12C 11/11***(2019.01)i; ***C12G 3/04***(2019.01)i

FI: A23L5/00 K; C12G3/04; C12C11/11; A23L5/00 Z; A23L11/65; A23L2/00 F; A23L2/52; C12C5/02

According to International Patent Classification (IPC) or to both national classification and IPC

**B. FIELDS SEARCHED**

Minimum documentation searched (classification system followed by classification symbols)

A23L5/00; A23L2/52; A23L11/65; C12C5/02; C12C11/11; C12G3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 63-502557 A (SOCIETE DES PRODUITS NESTLE S.A.) 29 September 1988 (1988-09-29) claims | 1-4, 8-9 |
| Y | claims | 5 |
| Y | WO 2017/104752 A1 (SUNTORY HOLDINGS LTD.) 22 June 2017 (2017-06-22) paragraph [0064] | 5 |
| Y | JP 2014-12646 A (KATAYAMA CHEM. WORKS CO., LTD.) 23 January 2014 (2014-01-23) claims 1, 8, paragraph [0037] | 1-8 |
| Y | JP 9-172962 A (YOTSUBA NYUGYO KK) 08 July 1997 (1997-07-08) example 8 | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026325**

| Patent document cited in search report | Publication date (day/month/year) | Patent family member(s) | Publication date (day/month/year) |
|---|---|---|---|
| JP 63-502557 A | 29 September 1988 | WO 1987/004904 A2<br>claims<br>EP 226211 A2<br>CH 668532 A<br>AT 38464 T<br>AU 7023587 A<br>ES 2004829 B<br>AT 38464 E | |
| WO 2017/104752 A1 | 22 June 2017 | US 2018/0371384 A1<br>paragraph [0121]<br>EP 3392330 A1<br>AU 2016371293 A<br>CN 108368463 A<br>CA 3008210 A | |
| JP 2014-12646 A | 23 January 2014 | (Family: none) | |
| JP 9-172962 A | 08 July 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009039048 A


### Non-patent literature cited in the description


- BCOJ Beer Analysis Method. The Brewing Society of Japan, 01 November 2004
- Revised BCOJ Beer Analysis Method. Public Interest Incorporated Foundation, The Brewing Society of Japan, 2013